# EUROPÄISCHE PATENTSCHRIFT

(11) **EP 2 516 182 B1**
(45) Veröffentlichungstag und Bekanntmachung des Hinweises auf die Patenterteilung: **02.10.2013**
(21) Anmeldenummer: 10788076.7
(22) Anmeldetag: 09.12.2010
(51) Int. Cl.: B60C 23/04

(54) **VERFAHREN UND VORRICHTUNG ZUM LOKALISIEREN DER VERBAUPOSITIONEN VON FAHRZEUGRÄDERN IN EINEM KRAFTFAHRZEUG**
METHOD AND DEVICE FOR LOCATING THE INSTALLATION POSITION OF VEHICLE WHEELS IN A MOTOR VEHICLE
PROCÉDÉ ET DISPOSITIF POUR LOCALISER LA POSITION DE MONTAGE DES ROUES DANS UN VÉHICULE

(30) Priorität: 21.12.2009 DE 102009059788
(43) Veröffentlichungstag der Anmeldung: 31.10.2012
(73) Patentinhaber: Continental Automotive GmbH, 30165 Hannover (DE)
(72) Erfinder: FINK, Alexander, 48306 Oakland Township, Michigan (US)
(86) Internationale Anmeldenummer: PCT/EP2010/069283
(87) Internationale Veröffentlichungsnummer: WO 2011/085877

(56) Entgegenhaltungen:
- EP-A1- 2 470 381
- EP-A2- 0 997 326
- US-B2- 7 336 161

## Beschreibung

Die vorliegende Erfindung bezieht sich auf ein Verfahren und eine Vorrichtung zum Lokalisieren der Verbaupositionen von Fahrzeugrädern in einem Kraftfahrzeug.

Der Reifendruck eines Fahrzeugrades unterliegt aufgrund verschiedenster Ursachen, zum Beispiel dem Umgebungsdruck des Rades, Temperatur, Alter des Rades, etc., bestimmten Änderungen. In diesem Zusammenhang wurde festgestellt, dass ein falsch eingestellter Reifendruck einen wesentlichen Faktor bei Unfällen im Straßenverkehr darstellt. Da die Fahrzeugsicherheit und Zuverlässigkeit zentrale Faktoren im Automobilbereich sind, muss allein schon aus sicherheitstechnischen Gründen der Reifendruck regelmäßig überprüft werden. Studien haben aber gezeigt, dass nur wenige Fahrer eines Fahrzeugs den Reifendruck regelmäßig prüfen. Moderne Kraftfahrzeuge weisen unter anderem aus diesen Gründen Reifeninformationsvorrichtungen wie etwa Reifendruckkontrollsysteme auf. Diese Reifeninformationsvorrichtungen weisen im Fahrzeugrad verbaute Radelektroniken auf, die radspezifische Messwerte verschiedener Messgrößen (z.B. Reifendruck, Reifentemperatur, Radlast, etc.) messen und davon abgeleitete Informationen an eine fahrzeugseitige Empfangseinrichtung senden.

Reifeninformationssysteme verwenden typischerweise jedem Fahrzeugrad zugeordnete elektronische Radeinheiten, welche die in Fahrzeugrädern ermittelten Daten mittels hochfrequenter Sendesignale an eine fahrzeugseitige zentrale Auswerteeinrichtung senden. Als elektronische Radeinheit, die nachfolgend kurz als Radelektronik bezeichnet werden, kann jede Einrichtung verstanden werden, die radspezifische Informationen und Zustände ermittelt, über die am Fahrzeugrad möglicherweise auftretende Fehlerzustände detektiert werden können. Der Begriff Fehlerzustand ist im vorliegenden Zusammenhang weit auszulegen und umfasst alle Zustände, Eigenschaften und Informationen eines jeweiligen Rades, die als detektionswürdig betrachtet werden können.

In diesem Zusammenhang besteht allerdings ein Problem darin, eine automatische und eindeutige Zuordnung eines empfangenen Sendesignals zur zunächst unbekannten Radposition des Senders, also der Radelektronik, zu treffen. Zwar kann eine Radelektronik eine für diese Radelektronik eindeutige Kennung in dem gesendeten Sendesignal mitübertragen, wie dies in der EP 626 911 B1 beschrieben ist. Jedoch ist damit noch nicht bekannt, an welcher Stelle des Fahrzeugs dieses Fahrzeugrad tatsächlich angebracht, also verbaut ist. Zusätzlich zu der eigentlichen Detektion eines Fehlerzustandes wird bei modernen Reifeninformationssystemen daher auch die so genannte Verbauposition der einzelnen Fahrzeugräder bezogen auf das Fahrzeug ermittelt. In der einschlägigen Literatur wird dies auch als Lokalisation bezeichnet.

Die EP 0 997 326 A2 offenbart ein Verfahren zur Zuordnung von Luftdruckkontrollvorrichtungen zu Radpositionen in einem Luftdruckkontrollsystem eines Fahrzeugs. Die Luftdruckkontrollvorrichtung überträgt zu einem ersten Zeitpunkt ihre individuelle Kennung zusammen mit der Anzahl der Umdrehungen, die an dem Rad, dem die Luftdruckkontrollvorrichtung zugeordnet ist, gemacht wurde, an eine Zentraleinheit. Zu einem zweiten Zeitpunkt überträgt die gleiche Luftdruckkontrollvorrichtung ihre individuelle Kennung zusammen mit der Anzahl der Umdrehungen, die das entsprechende Rad seit dem ersten Zeitpunkt gemacht hat, an die Zentraleinheit. Diese Daten werden mit Daten eines ABS-Sensors abgeglichen, um eine Zuordnung der Luftdruckkontrollvorrichtungen zu Radpositionen zu erreichen.

Die US 7,336,161 B2 offenbart ein Reifendruckkontrollsystem, bei dem mittels einer Radeinheit eine Entfernung ermittelt wird, die das Rad zurückgelegt hat. Mittels eines ABS-Sensors werden ebenfalls Entfernungen ermittelt, die die Räder zurückgelegt haben. Durch einen Abgleich der Entfernungen wird auf die Position der Radeinheit geschlossen.

Vor diesem Hintergrund liegt der vorliegenden Erfindung die Aufgabe zugrunde, eine möglichst einfache und zuverlässige Lokalisierung der Fahrzeugräder anzugeben.

Erfindungsgemäß wird diese Aufgabe mittels eines Verfahrens mit den Merkmalen des Patentanspruchs 1 und/oder mittels einer Vorrichtung mit den Merkmalen des Patentanspruchs 12 und/oder mittels eines Fahrzeugs mit den Merkmalen des Patentanspruchs 14 gelöst.

Demgemäß ist vorgesehen:
Ein Verfahren zum Lokalisieren der Verbaupositionen von Fahrzeugrädern in einem Kraftfahrzeug, bei dem zumindest ein Fahrzeugrad eine Radelektronik aufweist, mit den Schritten: Radelektronikseitiges Bestimmen einer ersten Drehwinkelposition des dieser Radelektronik zugeordneten Fahrzeugrades; Senden eines Sendesignals mit einer von der ermittelten ersten Drehwinkelposition abhängigen ersten Drehwinkelinformation; Fahrzeugseitiges Bestimmen von zweiten Drehwinkelpositionen der Fahrzeugräder und abhängig davon Bereitstellen von zweiten Drehwinkelinformation; Abgleichen der ersten Drehwinkelinformation mit den zweiten Drehwinkelinformationen; Bestimmen der Verbauposition des der Radelektronik zugeordneten Fahrzeugrades abhängig von diesem Abgleich.

- Eine Vorrichtung zum Lokalisieren der Verbaupositionen von Fahrzeugrädern in einem Kraftfahrzeug, insbesondere mittels eines erfindungsgemäßen Verfahrens, mit zumindest einer Radelektronik, die in einem Fahrzeugrad angeordnet ist und die dazu ausgelegt ist, eine erste Drehwinkelposition des ihr zugeordneten Fahrzeugrades zu bestimmen und eine von der ermittelten ersten Drehwinkelposition abhängige erste Drehwinkelinformation an eine fahrzeugseitige Empfangseinrichtung zu senden; mit zumindest einem fahrzeugseitigen Drehzahlsensor, der dazu ausgelegt ist, jeweils zweite Drehwinkelpositionen der ihnen jeweils zugeordneten Fahrzeugräder zu bestimmen und abhängig davon zweite Drehwinkelinformationen bereitzustellen; mit einer Auswerteeinrichtung, die die erste Drehwinkelinformation mit den zumindest zwei zweiten Drehwinkelinformationen abgleicht und abhängig von diesem Abgleich die Verbauposition des der Radelektronik zugeordneten Fahrzeugrades bestimmt.
- Ein Fahrzeug, insbesondere ein Personenkraftfahrzeug, mit mehreren Rädern und mit einer Reifeninformationsvorrichtung, die mit einer erfindungsgemäßen Vorrichtung ausgestattet ist.

Die Erfindung geht von der Erkenntnis aus, dass sich die an einem Fahrzeug vorhandenen Fahrzeugräder im Allgemeinen aufgrund diverser Faktoren, Einflüsse und Gegebenheiten mit mehr oder weniger unterschiedlichen Geschwindigkeiten drehen. Diese unterschiedlichen Drehinformationen werden erfindungsgemäß nun zur Bestimmung der Verbauposition verwendet, indem eine von einer Radelektronik ermittelte Drehwinkelinformation mit einer fahrzeugseitig ermittelten Drehwinkelinformation abgeglichen wird.

Das oben beschriebene erfindungsgemäße Auswerte- und Abgleichverfahren funktioniert vorteilhafterweise auch bei nur sporadischen Funkübertragungen. Jedoch wird bei relativ seltenen Übertragungen typischerweise die für die Lokalisierung benötigte Konvergenzzeit entsprechend steigen. Ferner muss die Radelektronik nicht notwendigerweise bei jeder Umdrehung eine Übertragung starten oder zu bestimmten Zeitintervallen jeweils zumindest eine Übertragung getätigt haben, wie es bei bekannten Verfahren erforderlich ist, sondern es reicht aus, wenn sie die Auswertung z. B. basierend auf der Anzahl von vollzogenen Radumdrehungen vornimmt.

Es ist auch nicht notwendig, dass die Positionsdetektion für jede Radumdrehung durchgeführt wird. Dies verringert auch den Energieverbrauch der Radelektronik, was aufgrund der lokalen Energieversorgung der Radelektronik und damit der begrenzten zur Verfügung stehenden Energie einen besonderen Vorteil darstellt.

Ferner hat das erfindungsgemäße Verfahren auch wenig Probleme bei einem Fahren des Fahrzeugs auf holprigen oder nassen Fahrbahnen, also bei Fahrbahnen mit niedrigem Reibwert oder bei einem zu großen Schlupf der Fahrzeugräder. Ganz im Gegenteil: Für das erfindungsgemäße Verfahren ist ein mehr oder weniger großer Radschlupf sogar von Vorteil, da sich dann die einzelnen Fahrzeugräder in ihrem Rotationsverhalten stärker voneinander unterscheiden. Dementsprechend ist es auch nicht relevant, welchen Weg ein Fahrzeugrad oder gar das Fahrzeug zurücklegt. Wesentlich ist nur die Orientierung oder der Drehwinkel der Fahrzeugräder.

Vorteilhafte Ausgestaltungen und Weiterbildungen der Erfindung ergeben sich aus den weiteren Unteransprüchen in Zusammenschau mit den Figuren der Zeichnung.

In einer bevorzugten Ausgestaltung der Erfindung werden von der Radelektronik mehrere Sendesignale mit entsprechend der Anzahl der Sendesignale mehreren ersten Drehwinkelinformationen zu unterschiedlichen Zeitpunkten gesendet und mit einer entsprechenden Anzahl an entsprechenden zweiten Drehwinkelinformationen abgeglichen.

Typischerweise werden zumindest 2, vorzugsweise zumindest 6 und insbesondere noch bevorzugter zumindest 20 gesendete Sendesignale für die Bestimmung der Verbauposition herangezogen.

In einer bevorzugten Ausgestaltung werden radelektronikseitig die verschiedenen Sendesignale jeweils an einer von der Radelektronik bekannten, fest vorgegebenen Drehwinkelposition gesendet wobei fahrzeugseitig für jedes empfangene Sendesignal zum Zeitpunkt des Empfangs dieses Sendesignals die zweiten Drehwinkelpositionen ermittelt werden, aus der die zweiten Drehwinkelinformationen abgeleitet werden.

In einer bevorzugten Ausgestaltung wird für jedes Fahrzeugrad eine Verteilung der zweiten Drehwinkelinformationen aufgestellt, wobei die Verteilung die von den zweiten Drehwinkelinformationen abgeleiteten zweiten Drehwinkelpositionen (z.B. in einer Darstellung von 0° bis 360°) beinhaltet. Für die Ermittlung der Verbauposition werden die Maximalwerte und/oder die Varianzen der Verteilung ausgewertet.

In einer bevorzugten Ausgestaltung wird diejenige Verteilung, die die größten Maximalwerte bzw. der geringsten Varianzen aufweist, als die Verbauposition des dieser Verteilung zugeordneten Fahrzeugrades bestimmt.

In einer bevorzugten Ausgestaltung werden Ausreißer in der Verteilung der zweiten Drehwinkelpositionen vor der Auswertung der Verteilung detektiert und dann eliminiert.

In einer bevorzugten Ausgestaltung wird bei einer Anhäufung von zweiten Drehwinkelpositionen nahe von 0° bzw. 360° die Verteilung der zweiten Drehwinkelpositionen um einen vorgegebenen Wert an der Abszisse, beispielsweise um 90° oder 180°, verschoben.

In einer bevorzugten Ausgestaltung ist vorgesehen: (a) Bestimmen der jeweiligen zweiten Drehwinkelpositionen für jedes Fahrzeugrad für zumindest zwei fahrzeugseitig nacheinander empfangene Sendesignale einer Radelektronik; (b) Berechnen von Differenzwerten der jeweiligen Drehwinkelpositionen bezogen auf jedes Fahrzeugrad; (c) Berechnen der Quotienten aus den berechneten Differenzwerten durch einen einer Vollumdrehung eines Fahrzeugrades entsprechenden Wert; (d) Bestimmen der Verbauposition als dasjenige Fahrzeugrad, welches den geringsten Quotienten aufweist.

In einer bevorzugten Ausgestaltung werden von der Radelektronik zumindest N Sendesignale gesendet werden. Für die Auswertung und Bestimmung der Verbauposition eines Fahrzeugrades werden zumindest N/2, vorzugsweise (N-1) und besonders vorzugsweise bis N*(N-1)/2 Kombinationen der zweiten Drehwinkelpositionen herangezogen, für die jeweils die Schritte (b) und (c) durchgeführt werden, wobei im Schritt (d) Verbauposition als dasjenige Fahrzeugrad bestimmt wird, welches kumulativ die geringsten Quotienten und/oder die geringste Verteilung der Quotienten aufweist.

In einer bevorzugten Ausgestaltung werden Verzögerungszeiten, die sich durch das radelektronikseitige Erstellen des Telegramms für das Sendesignal, bewusst eingefügte Verzögerungen oder Wartezeiten, das Senden des Sendesignals, das fahrzeugseitige Empfangen und Auswerten des Sendesignals, das Weiterleiten der sich aus dem empfangenen Sendesignal ergebenden ersten Drehwinkelinformationen, dem Ermitteln und Weiterleiten der zweiten Drehwinkelinformationen und dem Abgleichen der ersten und zweiten Drehwinkelinformationen ergeben, bei der Auswertung und beim Abgleichen mit einbezogen.

In einer bevorzugten Ausgestaltung ermitteln die zweiten Drehzahlsensoren die zweiten Drehzahlpositionen durch Zählen von ansteigenden und/oder abfallenden Taktflanken, wobei eine vorgegebene Anzahl an Taktflanken einer Vollumdrehung eines Fahrzeugrades entspricht.

In einer bevorzugten Ausgestaltung der erfindungsgemäßen Vorrichtung ist der Drehzahlsensor als ein ESP-Drehzahlsensor oder ein ABS-Drehzahlsensor ausgebildet.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den Figuren der Zeichnung angegebenen Ausführungsbeispiele näher erläutert. Es zeigen dabei:
- Fig. 1: eine schematische Darstellung eines mit einer erfindungsgemäßen Reifeninformationsvorrichtung ausgestatteten Fahrzeugs;
- Fig. 2A: ein Blockschaltbild einer erfindungsgemäßen Vorrichtung zum Lokalisieren der Verbaupositionen von Fahrzeugrädern in einem Kraftfahrzeug;
- Fig. 2B: ein Ablaufdiagramm zur Erläuterung des Ablaufs des erfindungsgemäßen Verfahrens zum Lokalisieren der Verbaupositionen;
- Fig. 3: einen Drehzahlsensor;
- Fig. 3A, 3B: jeweils die Ausgangssignale eines Drehzahlsensors für eine konstante Geschwindigkeit und eine variable Geschwindigkeit des Fahrzeugrades;
- Fig. 4: die Konfiguration eines Fahrzeugs mit Radelektroniken und zugeordneten Drehzahlsensoren;
- Fig. 5A - 5D: Verteilungen von Radwinkelpositionen von verschiedenen Fahrzeugrädern bezogen auf verschiedene Radelektroniken;
- Fig. 6A, 6B: die Verteilungen der Radwinkelpositionen verschiedener Fahrzeugräder bei einer Radelektronik in einer dreidimensionalen bzw. einer zweidimensionalen Darstellung;
- Fig. 7: eine Tabelle mit den Zeitpunkten von 20 Emissionen einer Radelektronik und die entsprechenden Zählerstände und Winkelpositionen von zwei verschiedenen Fahrzeugrädern;
- Fig. 7A, 7B: die Verteilungen der Radwinkelpositionen für die zwei Fahrzeugräder entsprechend Fig. 7;
- Fig. 8: eine Tabelle mit verschiedenen Zeitdifferenzen, den entsprechenden Zählerständen, der Anzahl der Umdrehungen und der Differenz bezogen auf eine Vollumdrehung für zwei verschiedene Räder;
- Fig. 8A, 8B: die entsprechenden Verteilungen für die beiden Fahrzeugräder entsprechend Fig. 8;
- Fig. 9A, 9B: zwei weitere Verteilungen von Radwinkelpositionen zur Erläuterung einer Verschiebung;
- Fig. 10A, 10B: zwei weitere Verteilungen der Radwinkelpositionen zur Erläuterung einer Ausreißerdetektion und -elimination.

In den Figuren der Zeichnung sind - sofern nichts Anderes ausführt ist - gleiche und funktionsgleiche Elemente, jeweils mit denselben Bezugszeichen versehen.

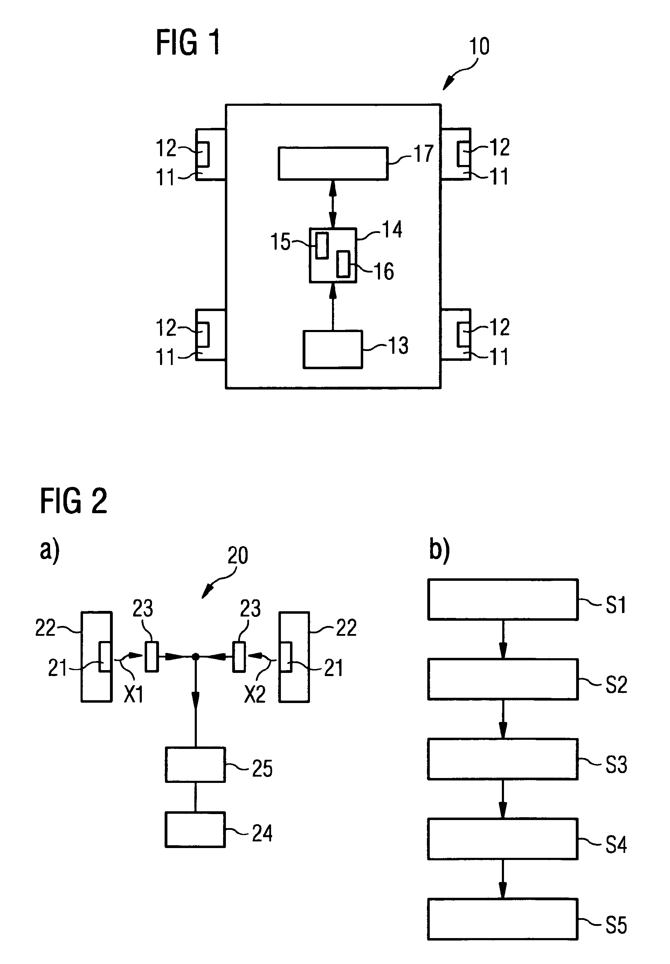

Fig. 1 zeigt eine schematische Darstellung eines mit einer Reifendruckkontrollvorrichtung ausgestatten Fahrzeugs. Das hier mit Bezugszeichen 10 bezeichnete Fahrzeug weist vier Fahrzeugräder 11 auf. Jedem Fahrzeugrad 11 ist eine Radelektronik 12 zugeordnet. Fahrzeugseitig ist eine (oder etwa auch zwei oder mehrere) zentrale Sende-/Empfangseinheit 13 vorgesehen, die mit den Radelektroniken 12 in kommunikativer Verbindung steht. Die Radelektroniken 12 und die Sende-/Empfangseinheit 13 sind insgesamt Bestandteil einer Reifeninformationsvorrichtung, welche darüber hinaus über ein zentrales Steuergerät 14 verfügt. Diese Reifeninformationsvorrichtung ist auch dazu ausgelegt, eine Lokalisation der verschiedenen Fahrzeugräder 10 vorzunehmen. Dieses Steuergerät 14 weist ferner eine programmgesteuerte Einrichtung 15, beispielsweise einen Mikrocontroller oder Mikroprozessor, und eine Speichereinrichtung 16, beispielsweise ein ROM oder DRAM, auf. Das Fahrzeug 10 weist darüber hinaus ein Fahrerinformationssystem 17 auf.

Fig. 2A zeigt ein schematisches Blockschaltbild der erfindungsgemäßen Vorrichtung zum Lokalisieren der Verbauposition von Fahrzeugrädern. Hierzu wird zunächst ein Kraftfahrzeug mit einer Reifeninformationsvorrichtung bereitgestellt, die eine Vorrichtung zum Lokalisieren der Verbauposition von Fahrzeugrädern aufweist. Diese Vorrichtung ist in Fig. 2A mit Bezugszeichen 20 bezeichnet. Die Vorrichtung 20 weist zumindest eine Radelektronik 21 (im gezeigten Beispiel zwei Radelektroniken 21) auf, die jeweils in einem Fahrzeugrad 22 angeordnet sind. Ferner weist die Vorrichtung 20 mehrere fahrzeugseitige Drehzahlsensoren 23 auf, die jeweils unterschiedlichen Fahrzeugrädern 22 zugeordnet sind. Schließlich ist eine Auswerteeinrichtung 24 vorgesehen, die über ein Stabilitätsregelungssystem 25 mit den Drehzahlsensoren 23 verbunden ist. Diese Auswerteeinrichtung 24 umfasst typischerweise eine (hier nicht gezeigte) Empfangs- und Abgleicheinrichtung. Die Fahrzeugräder 22 bzw. die darin vorgesehenen Radelektroniken 21 stehen mit dem Fahrzeug über eine drahtlose Funkverbindung in kommunikativer Verbindung, um Sendesignale X1, X2 zu einer hier nicht gezeigten fahrzeugseitigen Empfangseinrichtung, die zum Beispiel in der Auswerteeinrichtung vorgesehen sein kann, zu senden. Das Stabilitätsregelungssystem 25 kann zum Beispiel ein ABS- und/oder ESP-System sein, so dass die Drehzahlsensoren 23 nicht direkt mit der Auswerteeinrichtung 24 verbunden ist. Die Verbindung zwischen dem Stabilitätsregelungssystem 25 und der Auswerteeinrichtung 24 kann zum Beispiel als interner Kommunikationsbus ausgebildet sein.

Fig. 2B zeigt ein Ablaufdiagramm zur Darstellung des erfindungsgemäßen Verfahrens zum Lokalisieren der Verbauposition von Fahrzeugrädern in einem Kraftfahrzeug. Nachfolgend wird das erfindungsgemäße Verfahren anhand der Fig. 2A, 2B kurz erläutert:
Im Verfahrensschritt S1 erfolgt ein radelektronikseitiges Bestimmen einer ersten Drehwinkelposition des dieser Radelektronik 21 zugeordneten Fahrzeugrades 22. Im anschließenden Schritt S2 wird zunächst ein Sendesignal X1 bereitgestellt, welches diese Drehwinkelposition oder eine davon abhängige Drehwinkelinformation aufweist. Darüber hinaus kann das Sendesignal X1 auch weitere Informationen, beispielsweise radspezifische Informationen, wie etwa den Reifendruck oder die Reifentemperatur, enthalten. Dieses so bereitgestellte Sendesignal wird anschließend über eine radelektronikseitige Sendeeinrichtung gesendet. Das so gesendete Sensesignal X1 wird fahrzeugseitig von einer Empfangseinrichtung aufgenommen. Im Schritt S3 erfolgt dann ein fahrzeugseitiges Bestimmen von zweiten Drehwinkelpositionen der Fahrzeugräder 22, wobei hier nicht nur diejenige Drehwinkelposition des Fahrzeugrades 22 bestimmt wird, welches der das Sendesignal X1 sendenden Radelektronik 21 zugeordnet ist, sondern auch die Drehwinkelpositionen der übrigen Fahrzeugräder 22 bestimmt werden. Dadurch gewinnt man eine, typischerweise der Anzahl der Fahrzeugräder entsprechende Anzahl an Drehwinkelinformationen. In einem nächsten Schritt S4 werden die so gewonnenen ersten und zweiten Drehwinkelinformationen miteinander abgeglichen und vorzugsweise miteinander verglichen. Im abschließenden Schritt S5 erfolgt eine Bestimmung der Verbauposition und damit eine Lokalisation des der Radelektronik 21 zugeordneten Fahrzeugrades 22 abhängig von dem getroffenen Abgleich.

Nachfolgend werden verschiedene Ansätze zum Abgleich der radelektronikseitig und fahrzeugseitig ermittelten Radwinkelinformationen für die erfindungsgemäße Lokalisation erläutert:
Die Erfindung geht von der Erkenntnis aus, dass sich die an einem Fahrzeug vorhandenen Fahrzeugräder im Allgemeinen mit einer mehr oder weniger unterschiedlichen Geschwindigkeit drehen.

Die vorliegende Erfindung geht ferner davon aus, dass die Radelektronik in der Lage ist, eine bestimmte Drehwinkelposition der Radelektronik bezogen auf das Fahrzeug zu ermitteln. Diese Information wird verwendet, wenn die Radelektronik ein Sendesignal (mit einem entsprechenden Telegramm) an die fahrzeugseitige Empfangseinrichtung sendet. Das Telegramm des zu sendenden Sensesignals weist neben radspezifischen Informationen auch diese Drehwinkelposition oder davon abgeleitete Drehwinkelinformationen ab. Dabei ist es nicht wesentlich und bisweilen auch nicht vorteilhaft, dass die Radelektronik eben die genaue gemessene Drehwinkelposition kennt. Wesentlich ist lediglich, dass die Radelektronik und/oder die fahrzeugseitige Auswerteeinrichtung die Drehwinkelposition, bei dem die Radelektronik das Sendesignal sendet, aus der gemessenen Drehwinkelinformation ermitteln kann, beispielsweise unter Verwendung von bekannten Berechnungszeiten, Übertragungsdauern, Fahrzeuggeschwindigkeiten und dergleichen.

Die Erfindung geht ferner davon aus, dass fahrzeugseitig für jedes Fahrzeugrad ein Drehzahlsensor vorgesehen ist, z.B. als Bestandteil eines ESP- oder eines ABS-Systems. Mittels dieses Drehzahlsensors lassen sich Drehzahlsignalpulse und davon abgeleitet die genaue Radwinkelpositionen bezogen auf das Fahrzeug bestimmen.

Die Idee der vorliegenden Erfindung besteht nun darin, dass eine Radelektronik mehrfach Sendesignale aussendet. Diese Sendesignale werden von dieser Radelektronik immer an der genau gleichen oder zumindest einer genau bekannten Drehwinkelposition, die durch die Radelektronik bestimmt werden kann bzw. von der Auswerteeinrichtung zurückgerechnet werden kann, ausgesendet. Wird dieses Sendesignal fahrzeugseitig empfangen, dann werden zum Zeitpunkt des Empfangens oder zumindest zu einem davon und dem Sendezeitpunkt abgeleiteten Zeitpunkt fahrzeugseitig, z.B. mittels des Drehzahlsensors, die jeweiligen Radpositionen bestimmt.

### Radorientierung, Radwinkelstellung

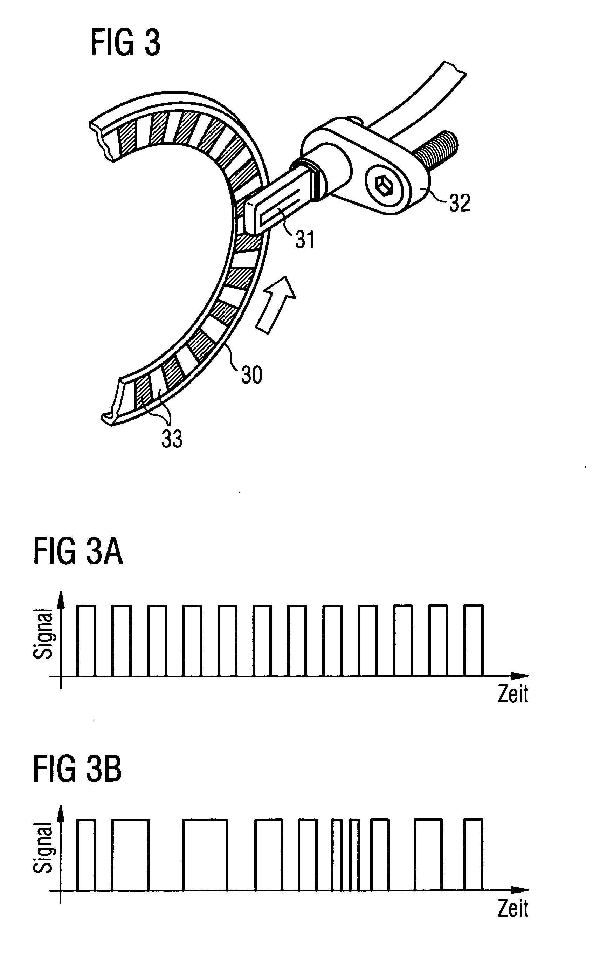

Fig. 3 zeigt schematisch einen Drehzahlsensor. In Fig. 3 ist mit Bezugszeichen 30 eine Referenzscheibe zur Drehzahlmessung und Drehwinkelbestimmung eines Fahrzeugrades dargestellt. Eine solche Scheibe 30 ist jedem der Fahrzeugräder zugeordnet und beispielsweise fest mit der Drehachse des jeweiligen Fahrzeugrades 11 verbunden. Die Scheibe 30 weist eine vorgegebene Anzahl (voneinander getrennter) Segmente auf, über welche eine exakte Drehwinkelbestimmung möglich ist. Heutige Scheiben weisen beispielsweise 48 Segmente 33 auf, die voneinander durch einen Zwischenbereich getrennt sind. In Fig. 3 ist ferner ein Drehzahlsensor 31 vorgesehen, der über eine Halterung 32 in mechanischem, elektrischem oder optischem Kontakt mit der Scheibe 30 steht. In der Halterung 32 kann auch eine Vorrichtung zur Auswertung des vom Drehzahlsensor 31 gelieferten elektrischen Signals vorgesehen sein. Diese Auswerteeinrichtung kann beispielsweise die von dem Drehzahlsensor 31 gezählten Impulse zählen und auswerten und abhängig davon eine aktuelle Drehwinkelposition bestimmen. Die verschiedenen Segmente 33 auf der Scheibe 30 lassen sich über den Drehzahlsensor 31 detektieren. Pro Wechsel zwischen einem Segment auf der Scheibe 30 zu einem benachbarten entsteht eine Schranke, so dass im Falle von 48 Segmenten einer Scheibe 30 insgesamt 96 Schranken pro komplette Radumdrehung zu zählen sind. Die Fig. 3A und 3B zeigen jeweils die Ausgangssignale eines Drehzahlsensors für eine konstante Geschwindigkeit des Fahrzeugrades (Fig. 3A) und eine variable Geschwindigkeit des Fahrzeugrades (Fig. 3B). Ausgangssignale stellen sich hier als nacheinander auftretende Rechteckimpulse konstanter Amplitude dar. Im Falle einer größer werdenden Geschwindigkeit werden die Rechteckimpulse schmäler und im Falle von geringerer Geschwindigkeit werden die Rechteckimpulse breiter.

Drehzahlsensoren haben in der Regel keine definierte Nullstellung, so dass eine absolute Winkelstellung nicht angegeben werden kann. Daher kann z.B. zu einem bestimmten Zeitpunkt, z. B. beim Einschalten der Zündung des Fahrzeugs und demzufolge des im Fahrzeug verbauten Steuergeräts, ein Segment 33 oder auch Zahn im Drehzahlsensor 31 als Referenzpunkt oder Nullpunkt definiert werden. Bezogen auf diese Drehwinkelposition können dann die folgenden Radwinkel basierend auf einer Zählung der nachfolgend durchlaufenden Flanken berechnet werden. Nach jedem Durchlauf von im genannten Beispiel 96 Flanken (bei einer Rotation in dieselbe Richtung) ist wieder die Referenzposition erreicht und damit eine vollständige Umdrehung vollzogen.

Beim Zählen der Flanken ist die Bewegungsrichtung des Rads (vorwärts, rückwärts) zu beachten, also ob eine Addition bzw. Subtraktion von Flanken von der aktuellen Position vorgenommen wird. Die Bewegungsrichtung kann z. B. durch die Auswertung aller vier Drehzahlsignale bestimmt werden. Zusätzlich oder alternativ kann die Bewegungsrichtung auch unter Heranziehen zusätzlicher gemessener Größen, z. B. der Fahrzeugbeschleunigung, Fahrzeugrotation (insbesondere das Gier- oder Nickverhalten, etc.) bestimmt oder plausibilisiert werden. Auch die Kenntnis des vom Fahrer oder der Fahrautomatik eingelegten Getriebegangs kann hierzu ausgewertet werden. Schließlich ist es auch möglich, spezielle Raddrehzahlsensoren der neuen Generation zu verwenden, die von vornherein eine Information bereit stellen, ob sich das Fahrzeugrad vorwärts oder rückwärts dreht. Somit steht zu jedem gewünschten Zeitpunkt immer eine aktuelle Drehrichtungsorientierung der Fahrzeugräder zur Verfügung.

Es wäre aber auch denkbar, speziell solche Abgleichverfahren einzusetzen, die auf eine absolute Rotationsposition (also der Drehwinkelposition) der Fahrzeugräder verzichten können. Dabei bezieht man sich z. B. immer nur auf die anhand der Anzahl der Flanken ermittelte, zurückgelegte Raddrehung zwischen zwei Zeitpunkten.

Die Drehzahlsignale vom Drehzahlsensor werden typischerweise direkt dem Brems- bzw. Stabilitätsregelsystem eines Fahrzeugs zur Verfügung gestellt. Ein unmittelbares Abzweigen der Sendesignale für andere Fahrzeugsysteme, wie etwa der Reifeninformationsvorrichtung, ist meist nicht erwünscht oder aus sicherheitstechnischen Gründen nicht erlaubt, um so zu verhindern, dass diese Signale verfälscht werden. Die Drehzahlsignale können deshalb nach einer Vorverarbeitung durch das Brems- bzw. Stabilitätsregelsystem auf einen Kommunikationsbus des Fahrzeugs eingekoppelt werden, so dass die Drehzahlsignale damit anderen Systemen zur Verfügung stehen.

Im Falle von zyklisch gesendeten Sendesignalen der Radelektronik wird die Anzahl der gezählten Flanken der Drehzahlsensoren seit den zuletzt gesendeten Sendesignalen geschickt. Eine typische Zykluszeit für die Übermittlung eines jeweiligen Sendesignals beträgt etwa 10 msec bis 20 msec.

### Abgleich

Beim Abgleich der Übertragungszeitpunkte der empfangenen Sendesignale mit den zugeordneten Winkelstellungen kann über einen betrachteten Auswertezeitraum Tx ein fester Zusammenhang zwischen den Übertragungszeitpunkten der Funkübertragungen jeder Kombinationen von Radelektroniken und Drehzahloder Drehgeschwindigkeitssensor, die zum gleichen Fahrzeugrad gehören, festgestellt werden. Dabei sendet jede Radelektronik in dem Telegramm ihres Sendesignals eine eindeutige Kennung, die eine fahrzeugseitige Identifizierung der jeweiligen Radelektroniken möglich macht.

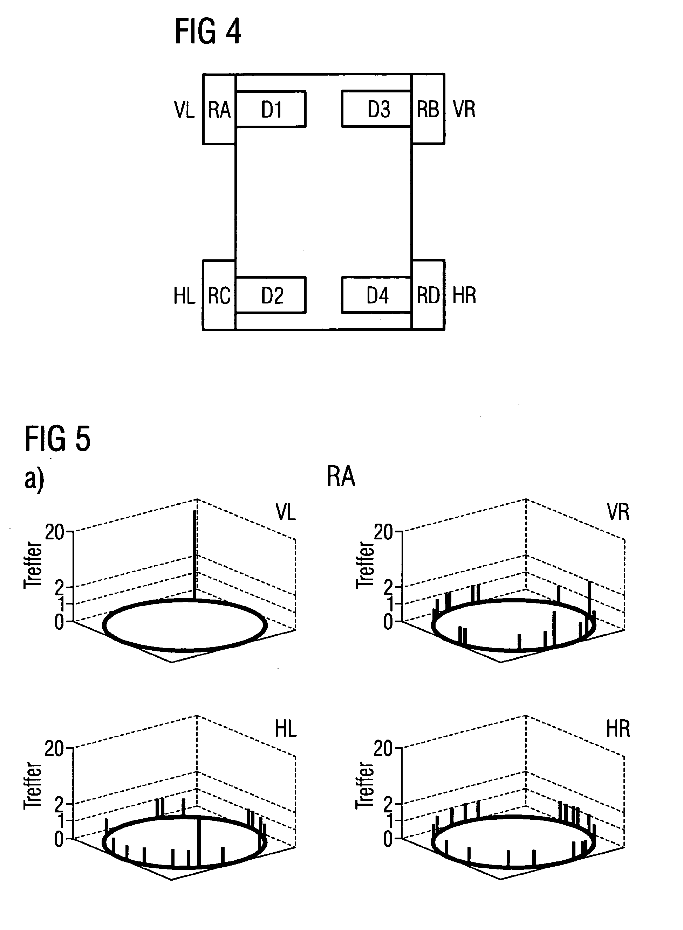

Für die in Fig. 4 dargestellte Fahrzeugkonfiguration mit Radelektroniken RA - RD und zugeordneten Drehzahlsensoren D1 - D4 ergibt sich z. B. der in Tabelle 1 angegebene Zusammenhang, wobei mit X eine Übereinstimmung und mit "---" keine Übereinstimmung bezeichnet ist. X gibt an, dass ein fester Zusammenhang zwischen den Übertragungszeitpunkten der Emissionen eine Radelektronik RA - RD und des jeweils zugeordneten Fahrzeugrads VL, VR, HL, HR besteht. Unter einer Emission versteht man nachfolgend das von einer Radelektronik ausgesendete Sendesignal.

**Tabelle 1**

| | D1 | D2 | D3 | D4 |
|---|---|---|---|---|
| RA | X | --- | --- | --- |
| RB | --- | --- | X | --- |
| RC | --- | X | ---- | --- |
| RD | --- | --- | --- | X |

Eine Übereinstimmung einer Radelektronik RA - RD wird jeweils nur mit einem einzigen, dieser Radelektronik RA - RD jeweils zugeordnetes Fahrzeugrad VL, VR, HL, HR bestehen, da sich während einer Fahrt alle Fahrzeugräder typischerweise individuell drehen. So muss z. B. ein kurvenäußeres Fahrzeugrad einen längeren Weg zurücklegen als ein kurveninneres Fahrzeugrad und dreht sich deshalb mit einer höheren Winkelgeschwindigkeit. Ferner herrscht bei einem angetriebenen Fahrzeugrad meist ein größerer Schlupf als an einem nicht angetriebenen Fahrzeugrad, so dass sich das angetriebene Fahrzeugrad geringfügig schneller dreht. Zusätzlich führen Unterschiede wie Reifenfülldruck, Profiltiefe, Reifengröße (z. B. durch unerwünschte Produktionsschwankungen), etc. zu unterschiedlichen Winkelgeschwindigkeiten der Fahrzeugräder.

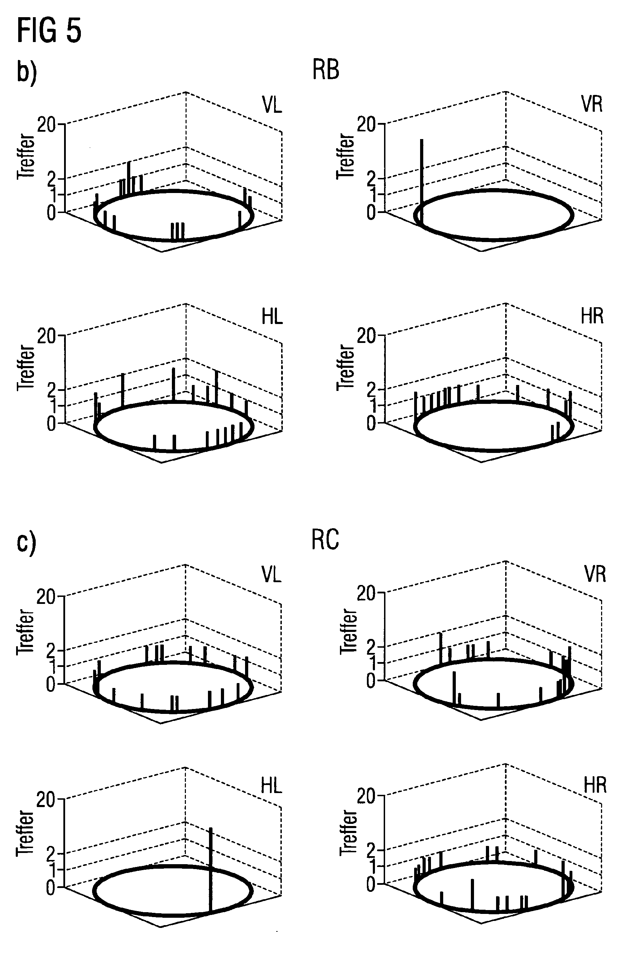

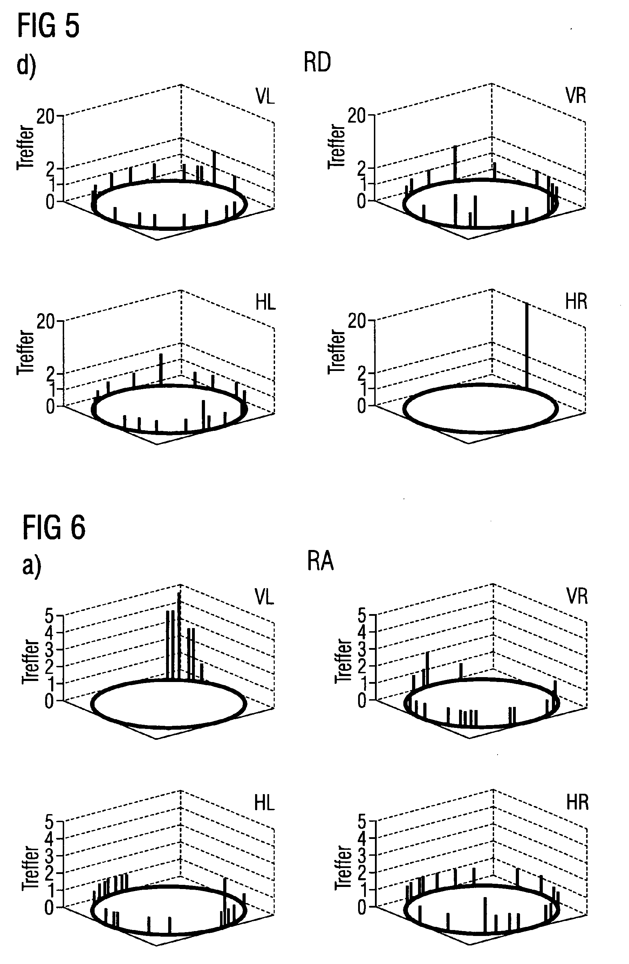

Im Idealfall ergibt sich bei einer Auswertung für die Radelektronik RA - RD eines Fahrzeugs die in den Fig. 5A - 5D dargestellten Zusammenhänge.

Im Folgenden wird von einem Personenkraftfahrzeug mit insgesamt vier Fahrzeugrädern VL, VR, HL, HR ausgegangen, wobei jedem dieser Fahrzeugräder VL, VR, HL, HR jeweils eine Radelektronik RA - RD und ein Drehzahlsensor D1-D4 zugeordnet ist. Eine der jeweiligen Radelektronik RA - RD zugeordnete fahrzeugseitige Empfangseinrichtung nimmt dabei jeweils die Emissionen, also die von den verschiedenen Radelektroniken RA - RD gesendeten Sendesignale, auf.

Dem besseren Verständnis halber sind die vier den verschiedenen Radelektroniken zugeordneten Emissionen in vier Figuren Fig. 5A - 5D dargestellt, wobei jeweils mit RA - RD die vier Radelektroniken bezeichnet sind. In jeder dieser Fig. 5A bis 5D sind darüber hinaus vier Teilfiguren enthalten, die jeweils im Falle einer Emission der jeweiligen Radelektronik RA - RD die Verteilung der Radwinkelpositionen als Anzahl der Treffer für jede Verbauposition zeigt, wobei mit VL, VR, HL, HR die Verbaupositionen der jeweiligen Radelektroniken RA - RD eines Fahrzeugrades vorne links, vorne rechts, hinten links bzw. hinten rechts bezeichnet. Die Verteilung zeigt hier getrennt für jede Verbauposition VL, VR, HL, HR die Trefferzahl, d. h. die Anzahl der Treffer pro Radwinkelposition, die beim Empfang einer Emission durch den Drehwinkelsensor gemessen wurde.

In den Darstellungen in den Fig. 5A - 5D sind die so aufgenommenen Radwinkelpositionen in Form einer dreidimensionalen Verteilung (so genanntes Histogramm) dargestellt, bei dem die schwarzen Kreise jeweils die Radwinkelpositionen von 0° bis 360° darstellen und die Peaks oder Ausschläge, die von diesen schwarzen Kreisen abstehen, jeweils Treffer für diese Radwinkelposition darstellen. In der Ebene der Ordinate sind die Anzahl der jeweiligen Treffer für die Emissionen bei einer speziellen Radwinkelposition dargestellt.

In den Fig. 5A - 5D sind jeweils 20 Emissionen und damit 20 Übertragungszeitpunkte (Emissionszeitpunkte) aufgetragen auf die jeweiligen Rotationspositionen der vier Fahrzeugräder von 0-360° gezeigt. Für jede Radelektronik RA - RD existiert jeweils eine Verbauposition für ein Fahrzeugrad VL, VR, HL, HR, bei dem alle ermittelten Radpositionen für diesen Emissionszeitpunkt übereinstimmen. Bei den anderen drei Fahrzeugrädern VL, VR, HL, HR lässt sich keine oder kaum eine Übereinstimmung finden. Ferner ist zu erkennen, dass eine absolute Positionsangabe des Radwinkels für eine eindeutige Zuordnung nicht unbedingt erforderlich ist.

Die Darstellungen in den Fig. 5A - 5D lassen sich nun so interpretieren, dass ein passendes Fahrzeugrad VL, VR, HL, HR mit zueinander übereinstimmenden Emissionen bei einer Emission bezüglich der Winkelstellung des Fahrzeugsrades immer gleich orientiert ist oder dass zwischen zwei aufeinander folgenden Emissionen immer eine ganze Anzahl von Radumdrehungen vollzogen wird.

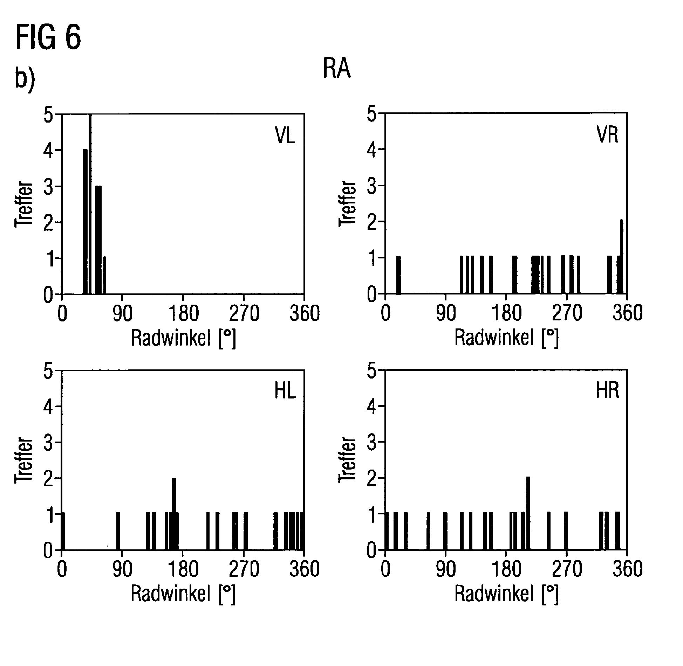

In der Realität sind derartige exakte Übereinstimmungen eher unwahrscheinlich. Dies ist z.B. bedingt durch Verarbeitungszeiten im Steuergerät, Verzugszeiten beim Empfang und der Weiterverarbeitung der Sendesignale, Unsicherheiten in der Winkelpositionserkennung in der Radelektronik, Rauschen, etc. Entsprechend wird sich eher eine Darstellung des 3-dimensionalen Histogramms entsprechend Fig. 6A ergeben, wobei hier lediglich der Zusammenhang der verschiedenen Emissionen für die Radelektronik RA gezeigt ist. Fig. 6B zeigt eine andere Darstellung in Form eines Histogramms, die die Verteilung der Emissionen auf die Radpositionen in einer etwas anderen Art und Weise darstellt. Im Prinzip wird das Fahrzeugrad von 0° bis 360° aufgeschnitten und auf eine gerade Linie aufgetragen. Diese Darstellung wird im Folgenden verwendet.

In Fig. 6B ist zu erkennen, dass die Radwinkelwerte beim passenden Fahrzeugrad, also bei dem Fahrzeugrad mit einer übereinstimmenden Radwinkelposition, nicht bei jeder Funkübertragung exakt übereinstimmen. Es ergibt sich vielmehr eine statistische Häufung bei einem Winkelbereich, der typischerweise einen deutlich erkennbaren Mittelwert und eine gewisse Varianz aufweist. Es ist jedoch nach wie vor ein deutlicher Zusammenhang zwischen der Radelektronik RA und dem zugeordneten, vorderen linken Fahrzeugrad VL zu erkennen. Mittels der nachfolgend geschilderten Auswerteverfahren werden diese Zusammenhänge der Radelektroniken RA - RD mit den dazugehörigen Fahrzeugräder VL, VR, HL, HR auf einer abstrakten Basis ermittelt.

Auswerteverfahren: Bestimmung von ganzzahligen Umdrehungen, Interpolation von Raddrehzahlsignalen vom Kommunikationsbus

Prinzipiell kann man unterschiedliche Konzepte zur Auswertung der Zusammenhänge zwischen Emissionen der Radelektroniken und der Radorientierungen in dem Steuergerät der Reifeninformationsvorrichtung einsetzen. Im Folgenden werden unterschiedliche Ansätze beschrieben, die vorzugsweise auch miteinander kombiniert werden:
1. Anhäufung/Konzentration von Emissionen einer Radelektronik bei einer bestimmten Radorientierung:
   In Fig. 6B ist zu erkennen, dass die Emissionen immer zu einer Radwinkelposition und damit zu einem Zeitpunkt auftreten, wenn das vordere linke Fahrzeugrad VL einen Orientierungswinkel von etwa 45° einnimmt. Im Vergleich dazu kann man bei den anderen Fahrzeugrädern VR, HL, HR keinen solchen Zusammenhang der Emissionen erkennen.
   Vorhandene Anhäufungen, die somit auf der Übereinstimmung der Emissionen mit dem Fahrzeugrad schließen lassen, werden in diesem ersten Ansatz numerisch quantifiziert. Hierzu kann z.B. die statistische Varianz der Treffer bezüglich der ermittelten Radwinkelposition berechnet werden. Es ist offensichtlich, dass die Streuung der Treffer im Diagramm in Fig. 6B bezogen auf die Rotationsposition für das vordere linke Fahrzeugrad VL weit geringer ist als die der Verteilung der übrigen Fahrzeugräder VR, HL, HR.
   Alternativ könnte auch eine Auswertung des Maximums (maximale Anzahl der Treffer an einer Radwinkelposition) innerhalb der vier verschiedenen Histogramme vorgenommen werden. So ist z. B. in Fig. 6B beim übereinstimmenden Fahrzeugrad VL der Wert 5 zu sehen, also 5 Emissionen wurden bei derselben Radwinkelposition empfangen, während nur Werte von 1 oder maximal 2 bei den anderen Fahrzeugräder VR, HL, HR vorhanden sind.
   Da es sich hierbei jedoch wieder um nicht-ideale "verrauschte" Messwerte handelt, ist es sinnvoll, nicht nur den einzelnen Wert des jeweiligen Maximums auszuwerten, sondern die beieinander liegenden Werte im Bereich des Maximums auszuwerten. Je nach Anzahl dieser Messwerte ergibt sich dann eine mehr oder weniger eindeutige Aussage, wobei die Deutlichkeit gesteigert werden kann, je mehr Messergebnisse und damit Emissionen mit einbezogen werden. Vorteilhaft ist natürlich eine Kombination von beiden oben genannten Methoden, also die Auswertung der Varianz der Verteilung in Kombination mit der Auswertung der Maxima.
2. Übereinstimmung von Zeitintervallen zwischen zwei Radelektronikemissionen mit ganzen Umdrehungen von Rädern:
   Das Fahrzeugrad VL vorne links vollzieht zwischen zwei Emissionen der Radelektronik RA meist eine annähernd ganze Anzahl von Umdrehungen. Ob ein Fahrzeugrad ganzzahlige Umdrehungen vollzieht, lässt sich durch eine so genannte Modulo-Division sehr gut bestimmen. Hierzu kann die Anzahl der Raddrehzahlsensor-Flanken seit der letzten Emission benutzen werden, z. B. 960 Flanken für 10 Umdrehungen bei 96 Flanken pro Umdrehung. Wenn der Rest einer Modulo-Division mit der Anzahl von Flanken für eine volle Umdrehung Null ergibt, hatte das entsprechende Fahrzeugrad eine ganze Anzahl von Umdrehungen vollzogen.

In der Praxis zeigt sich aber vielmehr, dass die Emissionen der Radelektronik, z.B. bedingt durch eine Ungenauigkeit in der Positionserkennung, Taktung der Signalverarbeitung nur in bestimmten Zeitintervallen in der Radelektronik, etc., nicht exakt an der gleichen Stelle stattfindet, so dass das entsprechende Fahrzeugrad nicht immer genau eine Umdrehung vollzieht. In der Praxis werden sich immer geringe Abweichungen bezogen auf eine volle Umdrehung einstellen, z. B. bei 962 Flanken ist der Rest der Modulo-Division dann 2, insbesondere wenn ein größerer Betrachtungszeitraum und damit eine große Anzahl an Umdrehungen vorhanden sind.

Ferner beziehen sich bisher allgemein bekannte Ansätze auf einen Vergleich einzelner Intervalle zwischen zwei aufeinander folgender Emissionen der Radelektroniken. Wenn z. B. nur zwei Emissionen von Radelektroniken zu den aufeinander folgenden Zeitpunkten T1 und T2 zur Verfügung stehen und damit nach Winkeländerungen der vier Fahrzeugräder (VL, VR, HL, HR) nach ganzzahligen Umdrehungen gesucht wird, wird die Genauigkeit der Erkennung eingeschränkt sein, insbesondere wenn sich die Fahrzeugräder in diesen Zeiträumen nur wenig unterschiedlich gedreht haben. Derselbe Effekt ergibt sich bei weiteren Messungen zu den Zeitpunkten T3, T4, T5, T6.

Bei dem erfindungsgemäßen Verfahren wird nun ein so genanntes kumulatives Verfahren vorgeschlagen, dass die Performanz der Positionserkennung stark verbessert. Das kumulative Verfahren sieht vor, alle möglichen Kombinationen zu bewerten, also nicht nur T1-T2, T2-T3, T3-T4, etc. Dabei werden im Falle von Emissionen/Messungen zu den Zeitpunkten T1, T2, T3, T4, T5, T6 z.B. folgende Kombinationen bewertet:
T1-T2,
T1-T3,
T1-T4,
T1-T5,
T1-T6,
T2-T3,
T2-T4,
T2-T5,
T2-T6,
T3-T4,
T3-T5,
T3-T6,
T4-T5,
T4-T6,
T5-T6.

Damit ergeben sich allgemein mit n unterschiedlichen Messungen T1 bis Tn insgesamt n*(n-1)/2 Kombinationen, die man untersuchen kann. Es ist ersichtlich, dass der Vorteil im Vergleich zum oben genannten einfachen Verfahren umso größer wird, je mehr Messwerte n zur Verfügung stehen. Der Vorteil basiert darauf, dass man weniger das Verhältnis zwischen zwei Ereignissen bewertet, sondern den gesamten Zusammenhang zwischen vorzugsweise allen oder zumindest einer größeren Anzahl an Emissionen betrachtet.

Es wurde bereits oben erläutert, wie die Radwinkelposition bzw. die Orientierung der Fahrzeugräder zu einem beliebigen Zeitpunkt basierend auf den Impulsen der Raddrehzahlen rekonstruiert werden kann. Eine Schwierigkeit entsteht dabei, wenn die Impulse von einem anderen Steuergerät in einer Nachricht auf einem Kommunikationsbus zur Verfügung gestellt werden. Diese Nachrichten werden in der Regel nicht genau zu den Zeitpunkten der Funkübertragungen, zu denen die Information jedoch benötigt wird, gesendet. In diesem Fall werden die Radwinkelpositionen zu einem gewünschten Zeitpunkt derart rekonstruiert, dass Interpolationsverfahren innerhalb der Nachrichtenempfänge auf dem Kommunikationsbus angewendet werden können. Hier ist eine Zykluszeit von ca. 5 msec bis 100 msec hinreichend genau.

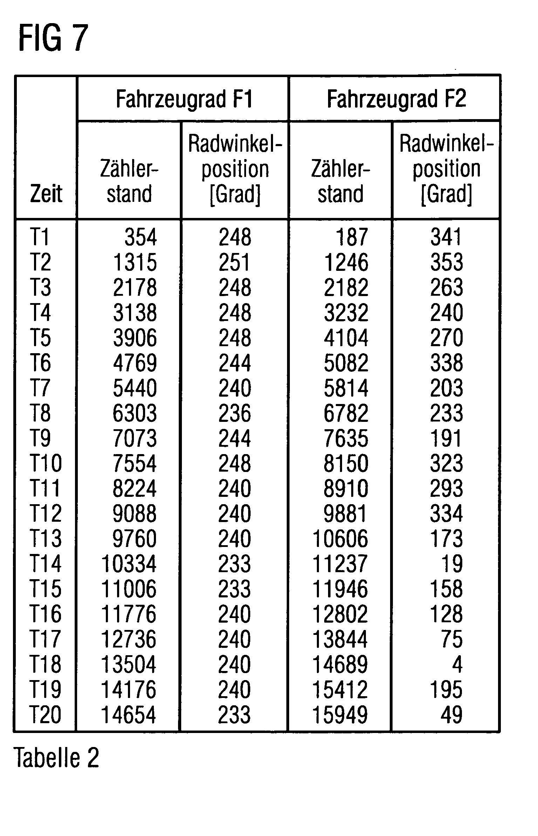

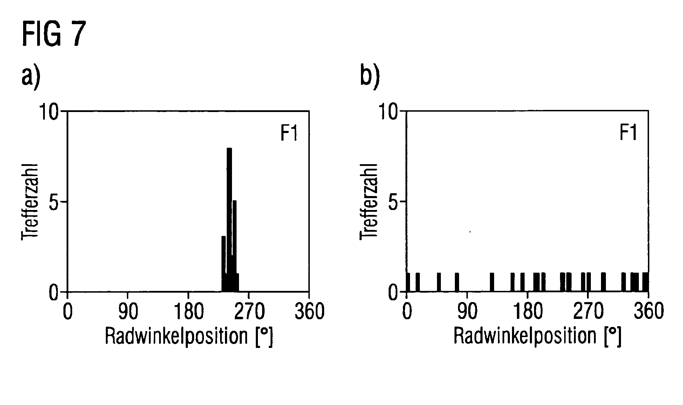

Nachfolgend wird ein Beispiel zur Verdeutlichung der beiden oben beschriebenen Auswerteverfahren anhand der Tabelle 2 in Fig. 7 beschrieben:
Tabelle 2 in Fig. 7 zeigt für 20 Emissionen einer Radelektronik, die für diese Zeitpunkte T1 - T20 vorhandenen Zählerstande für die gezählten Flanken und die entsprechenden Winkelpositionen für zwei unterschiedliche Räder. Zu jedem Zeitpunkt T1-T20 wird die aktuelle Orientierung bei zwei Rädern bestimmt. Auf die Darstellung der weiteren Fahrzeugräder ist in Tabelle 2 verzichtet worden. Die Winkelorientierung der Fahrzeugräder wird auf Basis der durchlaufenden Raddrehzahlimpulse bestimmt. Die Impulszahl/Flankenzahl wurde beim Einschalten des Steuergerätes auf z. B. Null zurückgesetzt und dann kontinuierlich weitergezählt. Im Beispiel der Fig. 7 - 7B wurde strikt vorwärts gefahren, so dass die Impulszahl mit zunehmendem Übertragungszeitpunkt der Telegramme streng monoton steigt. Die Radorientierungen erhält man durch die Modulo-Division mit der Anzahl der Impulse pro Umdrehung (360° = 1 Umdrehung) und einer nachträglichen Anpassung der Impulse an eine Gradangabe.

In Fig. 7 ist zu erkennen, dass das erste Fahrzeugrad F1 stets eine Orientierung von ca. 240° annimmt, wenn die Radelektronik Sendesignale emittiert. Bei dem anderen Fahrzeugrad F2 ist kein solcher Zusammenhang zu erkennen. Diese Zusammenhänge sind in den Fig. 7A, 7B in Form eines Histogramms dargestellt. Es ist klar zu erkennen, dass beim Fahrzeugrad F1 die Orientierungen sehr stark auf eine Position konzentriert sind, wobei beim Fahrzeugrad 2 keine Regelmäßigkeit zu erkennen ist. Dies entspricht dem oben geschilderten ersten Auswerteverfahren.

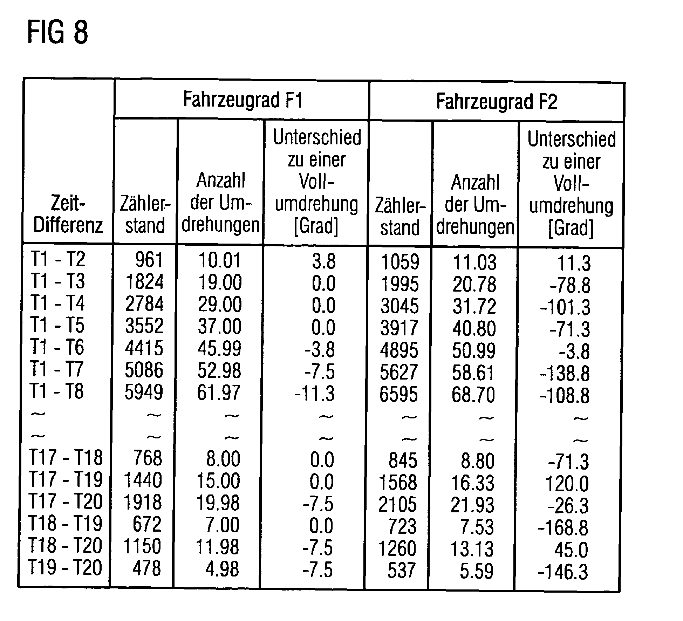

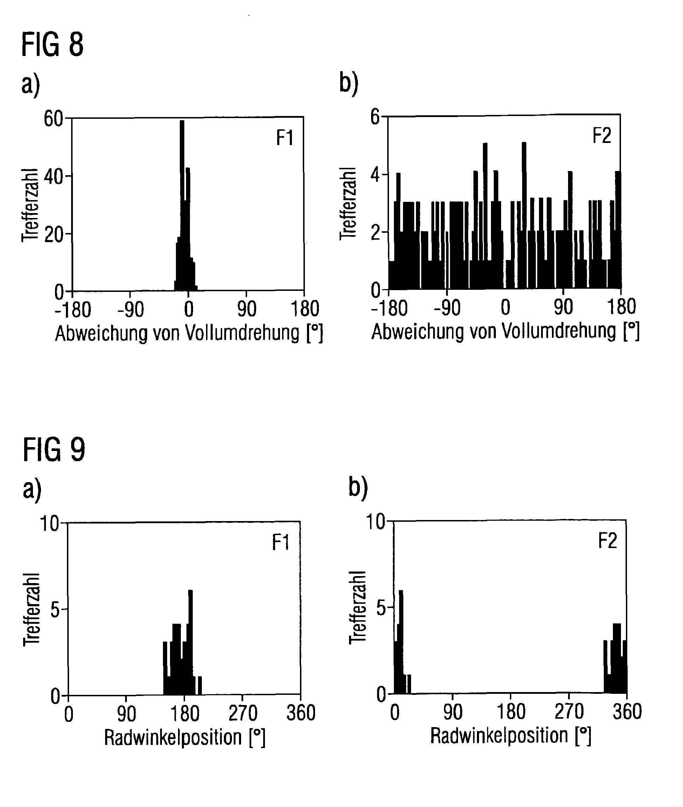

Im Folgenden wird das oben erwähnte zweite Auswerteverfahren anhand der Fig. 8 bis 8B beschrieben: Bei diesem Verfahren werden die Unterschiede zwischen jeweils zwei Übertragungszeitpunkten bewertet. Bei 20 Übertragungszeitpunkten T1 - T20 erhält man somit 20*19/2=190 Kombinationen. In der in Fig. 8 dargestellten Tabelle 3 sind zum einen die gezählten Impulse/Flanken zwischen den jeweiligen Übertragungszeitpunkten und die daraus berechnete Anzahl von Radumdrehungen dargestellt. Zusätzlich ist eine Differenz in Grad der Radumdrehungen bezogen auf eine volle Radumdrehung dargestellt.

Es ist anzumerken, dass die Differenz zu einer ganzen Anzahl von Radumdrehungen als absoluter Winkel angegeben ist. Alternativ könnte man natürlich auch eine relative Abweichung bezogen auf die Anzahl der Radumdrehungen bewerten.

In der Tabelle 3 in Fig. 8 ist zu erkennen, dass beim ersten Fahrzeugrad F1 ziemlich genau eine ganze Anzahl von Umdrehungen zwischen zwei Emissionen vorliegt, während beim Fahrzeugrad F2 dies nicht der Fall ist. Dies kann man auch wieder mit Hilfe zweier Histogramme in Fig. 8A für das erste Fahrzeugrad F1 und Fig. 8B für das zweite Fahrzeugrad F2 darstellen. Hier sind die Abweichungen jeweils zu einer ganzen Radumdrehung aufgetragen. Ausgehend von diesen Diagrammen kann man sehen, dass zur Bestimmung einer Übereinstimmung und damit für einen Abgleich die mathematischen Methoden des oben beschriebenen ersten Auswerteverfahrens anwendbar sind.

Zusammenfassend kann festgestellt werden, dass das oben erwähnte erste Verfahren sich an den aktuellen, also absoluten Orientierungen der Fahrzeugräder zu den jeweiligen Übertragungszeitpunkten orientiert und sich das zweite Verfahren auf die relativen Dehnungen zwischen zwei Emissionen, also der relativen Orientierung basiert. Zwar sind beide Verfahren nicht komplett unabhängig voneinander, jedoch führt eine Kombination beider Verfahren bei der Auswertung zu einer noch besseren Leistung der Positionszuweisung.

### Optimierung der vorgeschlagenen Verfahren

Beim oben beschriebenen ersten Verfahren wird nach Anhäufungen/Konzentrationen innerhalb der Verteilungen, also der Histogramme gesucht. Hierzu können allgemein bekannte statistische Ansätze verwendet werden, wie z. B. die Bestimmung der Varianz oder der Standardabweichung. Allerdings ist hier zu bedenken, dass ein Umdrehungswinkel von 359° auch nahe an einem Winkel von 1° liegt, bzw. der Winkel 360° sogar dem Winkel 0° entspricht. Ergeben sich, z.B. wie in der Fig. 9B dargestellt, Häufungen der Drehwinkel in diesen Winkelrandbereichen, würde sich die Auswertung mit den bekannten statistischen Ansätzen schwierig gestalten. Zur Lösung werden die oben genannten herkömmlichen statistischen Ansätze erweitert. Hierzu wird die obige Methode z. B. in der Art modifiziert, dass man die "verschobene" Verteilung um einen bestimmten Abstand "kreisförmig" entlang der Rotation des Rads über die Grenzen des Wertebereichs verschiebt oder auch Spiegelungen verwendet. Prinzipiell muss jedoch erst einmal detektiert werden, dass solch eine Verteilung über die Grenzen des Wertebereichs vorliegt. Dies ist in den Fig. 9A und 9B dargestellt. In der Darstellung in der Fig. 9A handelt es sich um die gleiche, jedoch verschobene Verteilung wie bei der in Fig. 9B, jedoch ist die Verteilung in Fig. 9A gegenüber der ursprünglichen Verteilung in Fig. 9B nur um einen absoluten Wert von ca. 180° verschoben.

Problematisch ist ferner, dass man in der Praxis immer wieder Ausreißer in der Verteilung der Radwinkelpositionen findet. Diese Ausreißer können z. B. durch Fehlbestimmungen der Rotationsposition innerhalb der Radelektronik oder auch durch Berechnungsprobleme innerhalb des Steuergeräts, z. B. durch Zeitverzögerungen der gesendeten und empfangenen Sendesignale, hervorgerufen werden. Besonders häufig ist dieser Effekt zu erwarten, wenn die Radelektronik z. B. bedingt durch Fahrbahnunebenheiten und dergleichen verursachte, stark verrauschte Sendesignale an einer falschen Übertragungsposition und damit einer falschen Drehwinkelposition sendet. In gewissem Maße ist eine geringe Variabilität der Verteilung immer zu erwarten, wie es auch schon in den bisherigen Histogrammen gezeigt wurde, vor allem wenn eine Vielzahl von Übertragungen ausgewertet werden sollen. Mit diesen Streuungen kommen die obigen Verfahren in der Regel auch gut zurecht.

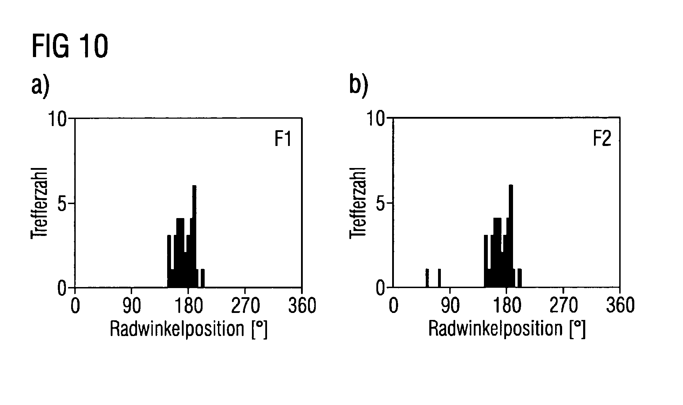

Probleme bereiten eher vereinzelte Ausreißer, wie in dem Histogramm in Fig. 10B gezeigt ist, wo Ausreißer bei etwa 60° und 80° vorhanden sind. Werden nun die genannten statistischen Verfahren angewendet, wie z. B. die Berechnung der Varianz, wird sich für das Beispiel in Fig. 10B eine wesentlich schlechtere Bewertung der Konzentration um den Mittelwert bei etwa 160° zeigen. Zum einen wird der Mittelwert der Verteilung durch die beiden Ausreißer bei 60° und 80° unerwünschterweise nach links verschoben. Zum anderen wird die Streuung erhöht. Aus diesem Grunde wird bei einer Optimierung des Verfahrens der Einfluss der Ausreißer eliminiert, indem z.B. vor der statistischen Bewertung eine Vorverarbeitung durchgeführt wird, bei der die vereinzelte Ausreißer, in Fig. 10B bei 60° und 80° detektiert und von der statistischen Bewertung ausgenommen werden. Fig. 10A zeigt die so bereinigte Verteilung. Diese Methode der Ausreißerdetektion kann sowohl bei dem ersten als auch bei dem zweiten Auswerteverfahren eingesetzt werden.

### Unterbrechungen im Raddrehzahlsignal

Für die oben beschriebenen Verfahren ist vorteilhaft, dass dem fahrzeugseitigen Steuergerät des Reifeninformationssystems kontinuierlich richtige Drehzahlinformationen zur Verfügung gestellt werden, so dass die Radorientierungen korrekt rekonstruiert werden können. Allerdings gibt es in der Praxis auch Situationen, bei denen dies nicht erfüllt ist. Zum Einen kann es Ausfälle am internen Kommunikationsbus geben, wodurch solche Drehzahlinformationen verloren gehen können. Zum Anderen kann es vorkommen, dass das Steuergerät davon ausgeht, dass ein Fahrzeugrad vorwärts dreht, da z. B. ein Vorwärtsgang eingelegt ist, das Fahrzeug aber rückwärts rollt, z. B. am Hang. Weiterhin kann es auch vorkommen, dass das Fahrzeug rollt, jedoch keine Richtungsinformation dazu vorliegt. In allen genannten Fällen führt dies dazu, dass eine falsche Radorientierung für die folgenden Übertragungszeitpunkte berechnet wird. Dadurch kann die Auswertung nicht korrekt durchgeführt werden, da es z. B. mehrere Anhäufungen der Verteilung bei den sich dadurch ergebenden Histogrammen für ein Fahrzeugrad ergeben können.

Hierzu kann man Auswerteverfahren einsetzen, die mehrere Anhäufungen erkennen können, was aber vergleichsweise aufwändig ist.

Alternativ wäre auch denkbar und vorteilhaft, beim ersten Auswerteverfahren die Verarbeitung immer auf die Zeitintervalle anzuwenden, in denen man zusammenhängend und zudem korrekte Radorientierungen bestimmen konnte. Für eine endgültige Zuweisung der Übertragungspositionen ist dann eine Gesamtbetrachtung der einzelnen Zeitintervalle erforderlich. Beim zweiten Auswerteverfahren ist die Umsetzung sogar etwas einfacher. Hier sucht man nach ganzzahligen Umdrehungen zwischen zwei Übertragungszeitpunkten immer nur zwischen zwei Zeitpunkten, die aus dem gleichen Zeitintervall mit zusammenhängend korrekten Radorientierungen stammen. Eine spezielle Betrachtung am Ende ist nicht mehr nötig, da es sich hier ohnehin immer nur um eine relative Betrachtung der Radorientierung anstelle von einer absoluten Betrachtung der Radorientierung handelt.

Unterbrechungen in der korrekten Bestimmung der Radorientierungen können auf unterschiedliche Weise festgestellt werden:
Einen Verlust einer Nachricht auf dem Kommunikationsbus kann man z. B. an einer Unstetigkeit in der zyklischen Verarbeitung detektieren. Ein Rollen des Fahrzeugs ohne Richtungsinformation erkennt man daran, dass Flanken der Drehzahlinformationen zu sehen sind, aber aktuell keine Richtungsinformation vorliegt. Ein Rollen in die falsche Richtung kann man z. B. durch eine Plausibilisierung mit Hilfe von anderen Signalen vom Fahrzeug wie etwa die Fahrzeugbeschleunigung, Rotationen, etc. erkennen. Prinzipiell wird dies auch nur vorkommen, wenn die Fahrzeuggeschwindigkeit sehr klein oder zeitweise bei Null ist, da nur dann ein Wechsel zwischen einem Vorwärtsgang und einem Rückwärtsgang möglich ist.

### Zuweisung der Reifenposition/Konvergenzkriterien

Die Bewertung der Anhäufungen der Emissionen in Bezug auf die Radwinkel ist die Grundlage für die Lokalisierung der Radelektroniken. Für die Bestimmung der Verbaupositionen am Fahrzeug ist jedoch noch ein zusätzlicher Schritt notwendig, der den Radelektroniken und damit den zugeordneten Fahrzeugrädern die korrekten Verbaupositionen am Fahrzeug zuweist. Diese Zuweisung kann auf Basis von unterschiedlichen Kriterien geschehen, die auch miteinander kombiniert werden können:
Signifikanzkriterium:
   Für jede Radelektronik wird eine Bewertung der Zugehörigkeit zu einem Fahrzeugrad durchgeführt. Hierbei wird das numerische Maß für die Zugehörigkeit einer Radelektronik mit jedem Fahrzeugrad bestimmt, z. B. anhand der bereits oben beschriebenen Auswerteverfahren. Abhängig von der Übereinstimmung der Emissionen mit den Radwinkelpositionen ergibt sich ein mehr oder weniger eindeutiges Bild. Ferner wird eine Signifikanzmaß pro Radelektronik generiert, welches das Verhältnis der Übereinstimmungen bewertet, insbesondere wie signifikant sich die Zugehörigkeit zum wahrscheinlichsten Fahrzeugrad gestaltet. Wenn dieses Maß eine vorgegebene Schwelle überschreitet, ist eine eindeutige oder zumindest eine die Signifikanzkriterien erfüllende, wahrscheinliche Zuordnung möglich.
Widersprüche bei der Zuordnung:
   Prinzipiell ist es möglich, dass basierend auf den Auswerteverfahren und der daraus gewonnenen Ergebnis zwei unterschiedliche Radelektroniken scheinbar zu dem gleichen Fahrzeugrad gehören können. Solche Widersprüche bei der Zuordnung müssen erkannt werden. In diesen Fällen wird eine Zuordnung der Radelektroniken zu den jeweiligen Verbaupositionen erst einmal unterbunden oder ausgesetzt. Eine Zuweisung erfolgt dann vorzugsweise basierend auf einem direkten Vergleich der Signifikanzmaße aller Radelektroniken und Fahrzeugräder.
Anzahl von verarbeiteten Funkemissionen:
   Je mehr empfangene Emissionen verarbeitet werden, umso sicherer wird im Allgemeinen eine Zuordnung. Es ist daher vorteilhaft, eine Mindestanzahl von Emissionen vorzugeben, die vor einer Zuweisung zumindest vorhanden und ausgewertet sein müssen. Vorteilhaft ist es dabei, eine Mindestanzahl an empfangenen Emissionen pro Radelektronik vorzugeben, beispielsweise zumindest 5 und bevorzugter zumindest 10 und noch bevorzugter zumindest 20.
Vorzeitige Zuweisung:
   Wenn für drei Radelektroniken deren Verbaupositionen bereits mit sehr hoher Sicherheit zugeordnet werden kann, kann man im Falle von vier Radelektroniken bzw. Fahrzeugrädern darauf verzichten, die Auswertung für die verbleibende vierte Radelektronik und damit die noch nicht belegte vierte Verbauposition vorzunehmen. Die Lokalisierungsfunktion kann dann auch beendet werden. Analog dazu kann man auch, wenn bereits eine Zuordnung für die Fahrzeugräder einer Achse möglich ist, diese Zuordnung dort durchführen. Dies ist vorteilhaft, wenn z. B. lediglich eine Achszuordnung durch unterschiedliche zu überwachende Achsdrücke erforderlich ist. In diesem Fall ist dann bereits - unabhängig von der Fahrzeugseiteninformation - eine Überwachung z. B. der Reifenfülldrücke möglich.

Es sind vielfältige Kombinationen der oben beschriebenen Punkte denkbar, z. B. mit UND- und/oder ODER-Verknüpfungen. Ferner sind auch Sonderfälle implementierbar: Ist z.B. eine Zuordnung auf Basis sehr eindeutiger Signifikanzmaßen möglich, könnte man dann z. B. auch auf die Anforderung einer Mindestanzahl von Emissionen verzichten.

Auf der einen Seite sollte die Lokalisierung so schnell wie möglich abgeschlossen sein. Auf der anderen Seite verdrehen sich die Fahrzeugräder am Fahrzeug beim Fahren in den meisten Fahrsituationen nur langsam gegeneinander. Dementsprechend dauert es mehr oder weniger lange, bis sich eindeutige Unterschiede bei den Abgleichverfahren abzeichnen und eine sichere Zuordnung möglich ist. In der Regel ist daher ein Kompromiss zwischen einer schnellen Lokalisierung einerseits und einer sicheren Lokalisierung andererseits sinnvoll und anzustreben.

Übertragungszeitpunkt: Sendezeitpunkt und Empfangszeitpunkt der gesendeten bzw. empfangenen Telegramme

Auf der Seite der Radelektronik (Sendeseite) werden die folgenden Schritte durchgeführt:
1. Warten auf den Übertragungszeitpunkt einer Emission (Übertragung eines vollständigen Telegramms) einer Radelektronik. Da die Radelektronik aber typischerweise nicht kontinuierlich sendet und oft auch ein Mindestabstand zwischen zwei Emissionen vorgeschrieben ist, muss eine Radelektronik jeweils auf eine Zeitscheibe zur Emission warten, z. B. alle 15 sec.
2. Detektion einer vorgegebenen Orientierung bzw. Winkelstellung des Fahrzeugrades, zu der gesendet werden soll. Alternativ kann auch eine aktuelle Orientierung des Fahrzeugrades erkannt werden, wobei dann diese Information im Telegramm des Sendesignals mitgesendet wird.
3. Zusammensetzen des Telegramms des Sendesignals; Vorbereitung der Funkübertragung.
4. Beginn des Senden eines Sendesignals (Emission), welches ein vollständiges Telegramm aufweist.
5. Ende des Senden des Sendesignals. Ein vollständiges Telegramm wurde gesendet.
6. Rücksprung zu Verfahrensschritt 1.

Auf der Seite der fahrzeugseitigen Empfangseinrichtung (Empfängerseite) werden folgende Schritte durchgeführt:
a. Warten auf ein Sendesignal mit einem vollständigen Telegramm.
b. Detektion des Beginns einer Funkübertragung.
c. Detektion des Endes der Funkübertragung.
d. Eventuell Übermittlung eines Zeitstempels mit Information über den Zeitpunkt der Funkübertragung.
e. Rücksprung zu a.

Der Zeitpunkt b. auf der Empfängerseite entspricht dem Zeitpunkt 4. auf der Sendeseite. Da es wichtig ist, dass die fahrzeugseitige, also empfängerseitige Auswerteeinheit weiß, wann die senderseitige Radelektronik eine Radorientierungsbestimmung durchgeführt hat, wird faktisch der Zeitpunkt 2. gesucht. Dies gestaltet sich meist schwierig. Der Empfänger wird daher in der Regel eher den Zeitpunkt c. bestimmen, d.h. den Zeitpunkt, bei dem das Telegramm fehlerfrei empfangen wurde. Eine Bestimmung des Zeitpunktes b. ist prinzipiell auch möglich, jedoch nicht unbedingt sinnvoll, wenn während dem Empfang eines gesendeten und empfangenen Sendesignals zwischendurch Abbrüche in der Funkübertragung auftreten. Vom Zeitpunkt c. kann im Allgemeinen aber ohne Weiteres auf den Zeitpunkt b. zurückgerechnet werden, da typischerweise bekannt ist, wie lange eine Funkübertragung typischerweise dauert. Diese Kenntnis hat man aufgrund der in einem vollständigen Sendeprotokoll enthaltenen Datenmenge, für deren Aussenden eine radelektronikseitige Sendeeinrichtung eine bekannte Zeitdauer benötigt. Dann ist es nur noch notwendig, vom Zeitpunkt 4. auf den Zeitpunkt 2. zurückzurechnen. Dies ist möglich, wenn man die Verzugszeit durch Analysen des Verhaltens der Radelelektronik ermittelt. Demzufolge ist es möglich, im Steuergerät auf den genauen Zeitpunkt 2. zurückzurechnen und für diesen die vier von der Radelektronik ermittelten Radorientierungen bzw. Radwinkelpositionen zu bestimmen.

Eine weitere Verzögerung kann entstehen, wenn das Telegramm von einer externen Empfangseinheit außerhalb des Steuergeräts über einen Kommunikationsbus an die Auswerteeinheit/Steuergerät übertragen wird. Hier kann ein Zeitstempel der Funkübertragung in der Nachricht mit übertragen werden. Alternativ wäre auch denkbar, eine bekannte, konstante Verzögerung, die für das Übertragen auf dem Kommunikationsbus erforderlich ist, für die Kommunikation einzuhalten. Diese Verzögerung kann dann im Steuergerät wieder herausgerechnet werden.

Generell ist es natürlich auch wünschenswert, alle vorhandenen Verzögerungen so klein wie möglich zu halten, um alle Informationen möglichst zeitnah und unverfälscht zu verarbeiten.

Beim Verhalten der Radelektronik ist eine Erweiterung des bisher beschriebenen Ablaufs sinnvoll. In der Praxis kommt es bisweilen vor, dass eine Radorientierung nicht bestimmt werden kann, wenn z. B. stark verrauschte Signale vorliegen. Dies kommt z. B. dann vor, wenn eine Straße, auf dem das Fahrzeug fährt, starke Unebenheiten hat. Wenn keine Orientierung detektiert werden kann oder auch eine Zeitüberschreitung während der Erkennung auftritt, soll dies in der Radelektronik festgestellt werden. In diesem Fall wird in der Regel immer noch ein Funktelegramm verschickt, um aktuelle Informationen über den Reifen, wie z. B. den Reifenfülldruck, an das Steuergerät zur Überwachung zu senden. Hier ist es dann notwendig, dass die Radelektronik einen Hinweis im Telegramm mitschickt, dass es sich um eine nichtorientierungsbezogene Emission handelt. Somit wird im Steuergerät nur die gesendete Information verarbeitet, nicht aber der Funkübertragungszeitpunkt zur Lokalisierung ausgewertet.

Bei der Bestimmung des Zeitpunkts 2. gibt es noch andere Faktoren, die eine Rollen spielen können und damit beachtet werden müssen. Diese werden im Folgenden kurz erläutert:
Es ist bekannt, dass es bei den Übertragungen der Reifensensoren so genannte "Black Spots" gibt. Dies sind Winkelpositionen des Rads, an denen ein Empfang eines Telegrams vom fahrzeugseitigen Empfänger schwer bzw. gar nicht möglich ist. Dies ist darauf zurückzuführen, dass die Funkstrecke z. B. durch Karosserieteile beeinträchtigt wird. Daher ist es sinnvoll, nicht immer an derselben Position zu emittieren, sondern eine willkürliche Verzögerung und damit den verschobenen Radwinkel vor der eigentlichen Funkaussendung mit einzubauen, so dass eine möglichst gleichmäßige Verteilung der Emissionen auf den kompletten Radumfang von 360° erreicht wird. Bei der Emission der Radelektronik ist es dann wichtig, dass im Telegramm eine Information über die jeweilige willkürliche Verzögerung enthalten ist. Im Steuergerät kann diese Verzögerung dann wieder herausgerechnet werden, um den ursprünglichen Zeitpunkt der Positionserkennung innerhalb der Radelelektronik zu erhalten. Ferner kann es in der Praxis immer wieder vorkommen, dass einzelne Übertragungen nicht korrekt empfangen werden, z. B. wegen Funkstörungen oder Auslöschungen durch Emissionen anderer Radelektroniken zur gleichen Zeit. Aus diesem Grund ist es vorteilhaft, die Informationen der Radelektroniken redundant zu schicken. Demzufolge werden einzelne Frames bzw. Emissionen gesendet, die identische Informationen beinhalten.

In der Praxis wird man nicht jeden Frame zu einer definierten Radorientierung senden, sondern die vordefinierte Orientierung für den ersten Frame bestimmen und dann die anderen Frames in einem definierten Muster nachsenden. Im Rahmen des positionsbezogenen Sendens der Radelektroniken ist es deshalb auch notwendig, dass man auch nur aus dem Empfang eines oder zwei der Frames eines Bursts auf die ursprüngliche Detektion der Orientierung zurückrechnen kann. Dazu ist es notwendig, dass jeder Frame eine Information trägt, um den wievielten Frame es sich innerhalb des Bursts handelt. Mit diesem Wissen und der Kenntnis über die Pausenzeiten zwischen den Frames kann das Steuergerät dann sukzessive auf den ursprünglichen Detektionszeitpunkt zurückrechnen.

Es sei noch einmal darauf hingewiesen, dass es nicht unbedingt notwendig ist, in der Radelektronik eine bestimmte Orientierung zu erkennen und dies zu emittieren. Alternativ ist es auch möglich, eine beliebige Orientierung zu erkennen, an dieser zu emittieren und die jeweilige Orientierungsinformation in dem gesendeten Sendesignal mitzusenden. Im Steuergerät kann aus dieser Information auch wieder nach einer Übereinstimmung der Übertragungszeitpunkte mit den Radwinkelpositionen gesucht werden. Die beschriebenen Verfahren können dafür leicht angepasst werden. Grundsätzlich ist es jedoch einfacher, eine vorgegebene Orientierung zu erkennen, als kontinuierlich eine Orientierung zu bestimmen.

Obgleich die vorliegende Erfindung vorstehend anhand bevorzugter Ausführungsbeispiele beschrieben wurde, ist sie nicht darauf beschränkt, sondern auf vielfältige Art und Weise modifizierbar.

Die vorliegende Erfindung nicht notwendigerweise auf ein in einem PKW eingesetzten Reifeninformationsvorrichtung beschränkt. Vielmehr lässt sich die Erfindung bei beliebigen Fahrzeugen, wie LKWs, Busse, Motorräder, antriebslose Anhänger, etc., einsetzen. Insbesondere sei die Erfindung auch nicht auf die beschriebenen Anzahlen an Fahrzeugräder am Fahrzeug beschränkt und es können auch mehr oder weniger als 4 Radelektroniken lokalisiert werden. Statt einer Radlokalisation wäre auch eine Achslokalisation denkbar und vorteilhaft.

An dieser Stelle wird darauf hingewiesen, dass die Erfindung auch auf die Lokalisierung von Reifen als solche bezogen ist, die Patentansprüche also auch im Sinne von "Vorrichtungen und Verfahren zur Lokalisierung zumindest eines Reifens an einem Fahrzeug" zu lesen ist. Der Begriff "Fahrzeugrad" wäre dann auch im übrigen Teil der Anmeldung gedanklich durch "Reifen" zu ersetzen.

Vor allem ist die Erfindung auch nicht auf die Art und Weise beschränkt, wie die Reifenelektronik eine Radposition bestimmt, bei der eine Emission statt finden soll. Dies kann auf beliebige Art und Weise, wie beispielsweise eine Auswertung einer Gravitationsinformation, die von einem Gravitationssensor ermittelt wurde, eine Beschleunigungsinformation, deren Ableitung, etc., geschehen.

### Bezugszeichenliste

- 10: Fahrzeug
- 11: Fahrzeugräder
- 12: Radelektroniken
- 13: Sende-/Empfangseinrichtungen
- 14: Steuergerät der Reifeninformationsvorrichtung
- 15: programmgesteuerte Einrichtung, Mikrocontroller
- 16: Speichereinrichtung
- 17: Fahrzeuginformationssystem
- 20: Vorrichtung
- 21: Radelektronik
- 22: Fahrzeugrad
- 23: Empfangseinrichtung
- 24: Auswerteeinrichtung
- 25: Stabilitätsregelungssystem
- 30: Scheibe
- 31: Drehzahlsensor
- 32: Halterung
- 33: Segmente an der Scheibe
- RA - RD: Radelektroniken
- D1 - D4: Drehzahlsensoren
- S1 - S5: Schritte
- T1 - T20: Übertragungszeitpunkte
- VL, VR: Verbauposition/Fahrzeugräder vorne links bzw. rechts
- HL, HR: Verbauposition/Fahrzeugräder hinten links bzw. rechts
- F1, F2: Fahrzeugräder
- X1, X2: Sendesignale

## Patentansprüche

1. Verfahren zum Lokalisieren der Verbaupositionen (VL, VR, HL, HR) von Fahrzeugrädern (11, 22) in einem Kraftfahrzeug (10), bei dem zumindest ein Fahrzeugrad eine Radelektronik (12, 21) aufweist, mit den Schritten:
Radelektronikseitiges Bestimmen (S1) einer ersten Drehwinkelposition des dieser Radelektronik (12, 21) zugeordneten Fahrzeugrades (11, 22);
Senden (S2) eines Sendesignals (X1) mit einer von der ermittelten ersten Drehwinkelposition abhängigen ersten Drehwinkelinformation;
Fahrzeugseitiges Bestimmen (S3) von zweiten Drehwinkelpositionen der Fahrzeugräder (11, 22) und abhängig davon Bereitstellen von zweiten Drehwinkelinformationen;
Abgleichen (S4) der ersten Drehwinkelinformation mit zweiten Drehwinkelinformationen;
Bestimmen (S5) der Verbauposition (VL, VR, HL, HR) des der Radelektronik (12, 21) zugeordneten Fahrzeugrades (11, 22) abhängig von diesem Abgleich,
**dadurch gekennzeichnet,**
**dass** Verzögerungszeiten, die sich durch das radelektronikseitige Erstellen des Telegramms für das Sendesignal (X1), bewusst eingefügte Verzögerungen oder Wartezeiten, das Senden des Sendesignals (X1), das fahrzeugseitige Empfangen und Auswerten des Sendesignals (X1), das Weiterleiten der sich aus dem empfangenen Sendesignal (X1) ergebenden ersten Drehwinkelinformationen, dem Ermitteln und Weiterleiten der zweiten Drehwinkelinformationen und dem Abgleichen der ersten und zweiten Drehwinkelinformationen, bei der Auswertung und beim Abgleichen mit einbezogen werden.

2. Verfahren nach Anspruch 1,
**dadurch gekennzeichnet,**
**dass** von der Radelektronik (12, 21) mehrere Sendesignale (X1) mit entsprechend der Anzahl der Sendesignale (X1) mehreren ersten Drehwinkelinformationen zu unterschiedlichen Zeitpunkten gesendet werden und mit einer entsprechenden Anzahl an entsprechend zweiten Drehwinkelinformationen abgeglichen werden.

3. Verfahren nach Anspruch 2,
**dadurch gekennzeichnet,**
**dass** zumindest 2, vorzugsweise zumindest 6 und insbesondere noch bevorzugter zumindest 20 gesendete Sendesignale für die Bestimmung der Verbauposition (VL, VR, HL, HR) herangezogen werden.

4. Verfahren nach einem der Ansprüche 2 oder 3,
**dadurch gekennzeichnet,**
**dass** radelektronikseitig die verschiedenen Sendesignale (X1) jeweils an einer von der Radelektronik (12, 21) bekannten, fest vorgegebenen Drehwinkelposition gesendet werden und dass fahrzeugseitig für jedes empfangene Sendesignal zum Zeitpunkt des Empfangs dieses Sendesignals (X1) die zweiten Drehwinkelpositionen ermittelt werden, aus der die zweiten Drehwinkelinformationen abgeleitet werden.

5. Verfahren nach Anspruch 4,
**dadurch gekennzeichnet,**
**dass** für jedes Fahrzeugrad (11, 22) eine Verteilung der zweiten Drehwinkelinformationen aufgestellt wird, wobei die Verteilung die von den zweiten Drehwinkelinformationen abgeleiteten zweiten Drehwinkelpositionen beinhaltet, und dass für die Ermittlung der Verbauposition (VL, VR, HL, HR) die Maximalwerte und/oder die Varianzen der Verteilung ausgewertet werden.

6. Verfahren nach Anspruch 5,
**dadurch gekennzeichnet,**
**dass** diejenige Verteilung, die die größten Maximalwerte bzw. der geringsten Varianzen aufweist, als die Verbauposition (VL, VR, HL, HR) des dieser Verteilung zugeordneten Fahrzeugrades (11, 22) bestimmt.

7. Verfahren nach einem der Ansprüche 5 oder 6,
**dadurch gekennzeichnet,**
**dass** Ausreißer in der Verteilung der zweiten Drehwinkelpositionen vor der Auswertung der Verteilung detektiert und eliminiert werden.

8. Verfahren nach einem der Ansprüche 5 bis 7,
**dadurch gekennzeichnet,**
**dass** bei einer Anhäufung von zweiten Drehwinkelpositionen nahe von 0° bzw. 360° die Verteilung der zweiten Drehwinkelpositionen um einen vorgegebenen Wert an der Abszisse, beispielsweise um 90° oder 180°, verschoben wird.

9. Verfahren nach einem der vorherigen Ansprüche,
**gekennzeichnet durch,**
(a) Bestimmen der jeweiligen zweiten Drehwinkelpositionen für jedes Fahrzeugrad (11, 22) für zumindest zwei fahrzeugseitig nacheinander empfangene Sendesignale einer Radelektronik (12, 21);
(b) Berechnen von Differenzwerten der jeweiligen Drehwinkelpositionen bezogen auf jedes Fahrzeugrad (11, 22);
(c) Berechnen der Quotienten aus den berechneten Differenzwerten **durch** einen einer Vollumdrehung eines Fahrzeugrades (11, 22) entsprechenden Wert;
(d) Bestimmen der Verbauposition (VL, VR, HL, HR) als dasjenige Fahrzeugrad (11, 22), welches den geringsten Quotienten aufweist.

10. Verfahren nach Anspruch 9,
**dadurch gekennzeichnet,**
**dass** von der Radelektronik (12, 21) zumindest N Sendesignale gesendet werden und dass für die Auswertung und Bestimmung der Verbauposition eines Fahrzeugrades (11, 22) zumindest N/2, vorzugsweise zumindest (N-1) und besonders vorzugsweise bis zu N*(N-1)/2 Kombinationen der zweiten Radwinkelpositionen herangezogen werden, für die jeweils die Schritte (b) und (c) durchgeführt werden und dass im Schritt (d) als Verbauposition (VL, VR, HL, HR) dasjenige Fahrzeugrad (11, 22) bestimmt wird, welches kumulativ die geringsten Quotienten und/oder die geringste Verteilung der Quotienten aufweist.

11. Verfahren nach einem der vorherigen Ansprüche,
**dadurch gekennzeichnet,**
**dass** die zweiten Drehzahlpositionen durch Zählen von ansteigenden und/oder abfallenden Taktflanken eines von einem Drehzahlsensor ermittelten Signals ermittelt werden, wobei eine vorgegebene Anzahl an Taktflanken einer Vollumdrehung eines Fahrzeugrades (11, 22) entspricht.

12. Vorrichtung (20) zum Lokalisieren der Verbaupositionen (VL, VR, HL, HR) von Fahrzeugrädern (11, 22) in einem Kraftfahrzeug (10), insbesondere mittels eines Verfahrens nach einem der Ansprüche 1 bis 11,
mit zumindest einer Radelektronik (12, 21), die in einem Fahrzeugrad (11, 22) angeordnet ist und die dazu ausgelegt ist, eine erste Drehwinkelposition des ihr zugeordneten Fahrzeugrades (11, 22) zu bestimmen und eine von der ermittelten ersten Drehwinkelposition abhängige erste Drehwinkelinformation an eine fahrzeugseitige Empfangseinrichtung zu senden;
mit zumindest einem fahrzeugseitigen Drehzahlsensor (31), der dazu ausgelegt ist, jeweils zweite Drehwinkelpositionen der ihnen jeweils zugeordneten Fahrzeugräder (11, 22) zu bestimmen und abhängig davon zweite Drehwinkelinformationen bereitzustellen;
mit einer Auswerteeinrichtung (24), die die erste Drehwinkelinformation mit den zumindest zwei zweiten Drehwinkelinformationen abgleicht und abhängig von diesem Abgleich die Verbauposition (VL, VR, HL, HR) des der Radelektronik (12, 21) zugeordneten Fahrzeugrades (11, 22) bestimmt,
**dadurch gekennzeichnet,**
**dass** Verzögerungszeiten, die sich durch das radelektronikseitige Erstellen des Telegramms für das Sendesignal (X1), bewusst eingefügte Verzögerungen oder Wartezeiten, das Senden des Sendesignals (X1), das fahrzeugseitige Empfangen und Auswerten des Sendesignals (X1), das Weiterleiten der sich aus dem empfangenen Sendesignal (X1) ergebenden ersten Drehwinkelinformationen, dem Ermitteln und Weiterleiten der zweiten Drehwinkelinformationen und dem Abgleichen der ersten und zweiten Drehwinkelinformationen, bei der Auswertung und beim Abgleichen mit einbezogen werden.

13. Vorrichtung nach Anspruch 12,
**dadurch gekennzeichnet,**
**dass** der Drehzahlsensor (31) als ein ESP-Drehzahlsensor oder ein ABS-Drehzahlsensor ausgebildet ist.

14. Fahrzeug (10), insbesondere Personenkraftfahrzeug, mit mehreren Fahrzeugrädern (11, 22) und mit einer Reifeninformationsvorrichtung, die mit einer Vorrichtung (20) nach einem der Ansprüche 12 oder 13 ausgestattet ist.

## Claims

1. Method for localizing the installation positions (FL, FR, RL, RR) of vehicle wheels (11, 22) in a motor vehicle (10), in which at least one vehicle wheel has wheel electronics (12, 21), having the following steps:
the wheel electronics determine (S1) a first rotation angle position for the vehicle wheel (11, 22) associated with said wheel electronics (12, 21);
a transmission signal (X1) is sent (S2) with a first rotation angle information item which is dependent on the ascertained first rotation angle position;
the vehicle determines (S3) second rotation angle positions for the vehicle wheels (11, 22), and said second rotation angle positions are taken as a basis for providing second rotation angle information items;
the first rotation angle information item is aligned (S4) with second rotation angle information items;
the installation position (FL, FR, RL, RR) of the vehicle wheel (11, 22) associated with the wheel electronics (12, 21) is determined (S5) on the basis of said alignment,
**characterized**
**in that** delay times which are obtained by virtue of the creation of the telegram for the transmission signal (X1) by the wheel electronics, consciously inserted delays or waiting times, the sending of the transmission signal (X1), the reception and evaluation of the transmission signal (X1) by the vehicle, the forwarding of the first rotation angle information items obtained from the received transmission signal (X1), the ascertainment and forwarding of the second rotation angle information items and the alignment of the first and second rotation angle information items are also included in the evaluation and in the alignment.

2. Method according to Claim 1,
**characterized**
**in that** the wheel electronics (12, 21) send a plurality of transmission signals (X1) with a plurality of first rotation angle information items, corresponding to the number of transmission signals (X1), at different instants and align said transmission signals with a corresponding number of correspondingly second rotation angle information items.

3. Method according to Claim 2,
**characterized**
**in that** at least two, preferably at least six and particularly still more preferably at least 20 sent transmission signals are used for determining the installation position (FL, FR, RL, RR).

4. Method according to either of Claims 2 and 3,
**characterized**
**in that** the wheel electronics send the various transmission signals (X1) at a respective firmly prescribed rotation angle position which is known by the wheel electronics (12, 21) and in that the vehicle ascertains the second rotation angle positions for each received transmission signal at the instant of reception of said transmission signal (X1), said second rotation angle positions being used to derive the second rotation angle information items.

5. Method according to Claim 4,
**characterized**
**in that** distribution of the second rotation angle information items is set up for each vehicle wheel (11, 22), wherein the distribution includes the second rotation angle positions derived from the second rotation angle information items, and in that the installation position (FL, FR, RL, RR) is ascertained by evaluating the maximum values and/or the variances of the distribution.

6. Method according to Claim 5,
**characterized**
**in that** that distribution which has the greatest maximum values or the smallest variances is determined as the installation position (FL, FR, RL, RR) of the vehicle wheel (11, 22) which is associated with said distribution.

7. Method according to either of Claims 5 and 6,
**characterized**
**in that** outliers in the distribution of the second rotation angle positions are detected and eliminated before the distribution is evaluated.

8. Method according to one of Claims 5 to 7,
**characterized**
**in that** a cluster of second rotation angle positions close to 0° or 360° involves the distribution of the second rotation angle positions being shifted by a prescribed value on the abscissa, for example through 90° or 180°.

9. Method according to one of the preceding claims,
**characterized by**
(a) determination of the respective second rotation angle positions for each vehicle wheel (11, 22) for at least two transmission signals received in succession by the vehicle from wheel electronics (12, 21);
(b) calculation of differential values for the respective rotation angle positions with reference to each vehicle wheel (11, 22);
(c) calculation of the quotients from the calculated differential values by a value which corresponds to a full revolution of a vehicle wheel (11, 22);
(d) determination of the installation position (FL, FR, RL, RR) as that vehicle wheel (11, 22) which has the smallest quotient.

10. Method according to Claim 9,
**characterized**
**in that** the wheel electronics (12, 21) send at least N transmission signals and in that the evaluation and determination of the installation position of a vehicle wheel (11, 22) involve the use of at least N/2, preferably at least (N-1) and particularly preferably up to N*(N-1)/2 combinations of the second wheel angle positions, for each of which steps (b) and (c) are performed, and in that step (d) involves the installation position (FL, FR, RL, RR) determined being that vehicle wheel (11, 22) which cumulatively has the smallest quotients and/or the smallest distribution of the quotients.

11. Method according to one of the preceding claims,
**characterized**
**in that** the second rotation speed positions are ascertained by counting rising and/or falling clock edges in a signal ascertained by a rotation speed sensor, wherein a prescribed number of clock edges corresponds to a full revolution of a vehicle wheel (11, 22).

12. Apparatus (20) for localizing the installation positions (FL, FR, RL, RR) of vehicle wheels (11, 22) in a motor vehicle (10), particularly using a method according to one of Claims 1 to 11,
having at least one wheel electronics unit (12, 21) which is arranged in a vehicle wheel (11, 22) and which is designed to determine a first rotation angle position for its associated vehicle wheel (11, 22) and to send a first rotation angle information item, which is dependent on the ascertained first rotation angle position, to a reception device in the vehicle;
having at least one rotation speed sensor (31) in the vehicle, said rotation speed sensor being designed to determine respective second rotation angle positions for their respective associated vehicle wheels (11, 22) and to take said second rotation angle positions as a basis for providing second rotation angle information items;
having an evaluation device (24) which aligns the first rotation angle information item with the at least two second rotation angle information items and takes said alignment as a basis for determining the installation position (FL, FR, RL, RR) of the vehicle wheel (11, 22) associated with the wheel electronics (12, 21),
**characterized**
**in that** delay times which are obtained by virtue of the creation of the telegram for the transmission signal (X1) by the wheel electronics, consciously inserted delays or waiting times, the sending of the transmission signal (X1), the reception and evaluation of the transmission signal (X1) by the vehicle, the forwarding of the first rotation angle information items obtained from the received transmission signal (X1), the ascertainment and forwarding of the second rotation angle information items and the alignment of the first and second rotation angle information items are also included in the evaluation and in the alignment.

13. Apparatus according to Claim 12,
**characterized**
**in that** the rotation speed sensor (31) is in the form of an ESP rotation speed sensor or an ABS rotation speed sensor.

14. Vehicle (10), particularly an automobile, having a plurality of vehicle wheels (11, 22) and having a tire information apparatus which is equipped with an apparatus (20) according to either of Claims 12 and 13.

## Revendications

1. Procédé de localisation des positions de montage (VL, VR, HL, HR) des roues de véhicule (11, 22) dans un véhicule automobile (10), dans lequel au moins une roue de véhicule présente un système électronique de roue (12, 21), comportant les étapes de :
détermination (S1), du côté du système électronique de roue, d'une première position de rotation de la roue de véhicule (11, 22) associée à ce système électronique de roue (12, 21) ;
émission (S2) d'un signal d'émission (X1) avec une première information d'angle de rotation dépendant de la première position de rotation déterminée ;
détermination (S3), du côté du véhicule, de deuxièmes positions de rotation des roues de véhicule (11, 22) et en fonction de cela, mise à disposition de deuxièmes informations d'angle de rotation ;
comparaison (S4) entre la première information d'angle de rotation et les deuxièmes informations d'angle de rotation ;
détermination (S5), en fonction de cette comparaison, de la position de montage (VL, VR, HL, HR) de la roue de véhicule (11, 22) associée au système électronique de roue (12, 21),
**caractérisé en ce que** des durées de décélération, des décélérations ou des temps d'attente intégrés volontairement par la création, du côté du système électronique de roue, du télégramme pour le signal d'émission (X1), l'émission du signal d'émission (X1), la réception et l'analyse, du côté du véhicule, du signal d'émission (X1), la transmission des premières informations d'angle de rotation résultant du signal d'émission (X1) reçu, sont inclus dans la détermination et la transmission des deuxièmes informations d'angle de rotation et dans la comparaison entre les premières et les deuxièmes informations d'angle de rotation lors de l'analyse et de la comparaison.

2. Procédé selon la revendication 1, **caractérisé en ce que** plusieurs signaux d'émission (X1) avec plusieurs premières informations d'angle de rotation correspondant au nombre de signaux d'émission (X1) sont émis à des instants différents par le système électronique de roue (12, 21) et sont comparés à un nombre correspondant de deuxièmes informations d'angle de rotation correspondantes.

3. Procédé selon la revendication 2, **caractérisé en ce qu'**au moins 2, de préférence au moins 6 et en particulier de manière davantage préférée au moins 20 signaux d'émission émis sont pris en compte pour déterminer la position de montage (VL, VR, HL, HR).

4. Procédé selon l'une quelconque des revendications 2 ou 3, **caractérisé en ce que**, du côté du système électronique de roue, les différents signaux d'émission (X1) sont émis respectivement à une position de rotation prédéfinie de manière fixe, connue du système électronique de roue (12, 21), et **en ce que**, du côté du véhicule, les deuxièmes positions de rotation, à partir desquelles sont dérivées les deuxièmes informations d'angle de rotation, sont déterminées pour chaque signal d'émission reçu à l'instant de la réception de ce signal d'émission (X1).

5. Procédé selon la revendication 4, **caractérisé en ce qu'**une distribution des deuxièmes informations d'angle de rotation est établie pour chaque roue de véhicule (11, 22), la distribution contenant les deuxièmes positions de rotation dérivées des deuxièmes informations d'angle de rotation, et **en ce que** les valeurs maximales et/ou les variances de la distribution sont analysées pour la détermination de la position de montage (VL, VR, HL, HR).

6. Procédé selon la revendication 5, **caractérisé en ce que** cette distribution qui présente les valeurs maximales les plus élevées ou les variances les plus faibles est déterminée comme étant la position de montage (VL, VR, HL, HR) de la roue de véhicule (11, 22) associée à cette distribution.

7. Procédé selon l'une quelconque des revendications 5 ou 6, **caractérisé en ce que** des valeurs aberrantes sont détectées dans la distribution des deuxièmes positions de rotation avant l'analyse de la distribution et en sont éliminées.

8. Procédé selon l'une quelconque des revendications 5 à 7, **caractérisé en ce que** dans le cas d'une accumulation de deuxièmes positions de rotation proches de 0 ° ou 360 °, la distribution des deuxièmes positions de rotation est décalée selon une valeur prédéfinie au niveau des abscisses, par exemple de 90 ° ou 180 °.

9. Procédé selon l'une quelconque des revendications précédentes, **caractérisé par**
(a) la détermination des deuxièmes positions de rotation respectives pour chaque roue de véhicule (11, 22) pour au moins deux signaux d'émission d'un système électronique de roue (12, 21), reçus l'un à après l'autre du côté du véhicule ;
(b) le calcul des valeurs différentielles des positions de rotation respectives relatives à chaque roue de véhicule (11, 22) ;
(c) le calcul des quotients à partir des valeurs différentielles calculées par une valeur correspondant à une rotation complète d'une roue de véhicule (11, 22) ;
(d) la détermination de la position de montage (VL, VR, HL, HR) comme cette roue de véhicule (11, 22), qui présente le quotient le plus faible.

10. Procédé selon la revendication 9, **caractérisé en ce qu'**au moins N signaux d'émission sont émis par le système électronique de roue (12, 21), et **en ce que** pour l'analyse et la détermination de la position de montage d'une roue de véhicule (11, 22) sont prises en compte au moins N/2, de préférence au moins (N-1) et, en particulier, de préférence jusqu'à N*(N-1)/2 combinaisons des deuxièmes positions de rotation, pour lesquelles sont mises en oeuvre respectivement les étapes (b) et (c), et **en ce que** à l'étape (d) cette roue de véhicule (11, 22) est déterminée comme position de montage (VL, VR, HL, HR), qui présente cumulativement les quotients les plus faibles et/ou la distribution la plus faible des quotients.

11. Procédé selon l'une quelconque des revendications précédentes, **caractérisé en ce que** les deuxièmes positions de rotation sont déterminées par le comptage des flancs d'impulsion ascendants et/ou descendants d'un signal émis par le capteur de vitesse de rotation, un nombre prédéfini de flancs d'impulsion correspondant à une rotation complète d'une roue de véhicule (11, 22).

12. Dispositif (20) de localisation des positions de montage (VL, VR, HL, HR) des roues de véhicule (11, 22) dans un véhicule automobile (10), en particulier au moyen d'un procédé selon l'une quelconque des revendications 1 à 11,
comportant au moins un système électronique de roue (12, 21), qui est agencé dans une roue de véhicule (11, 22) et qui est conçu pour déterminer une première position de rotation de la roue de véhicule (11, 22) qui lui est associée, et pour émettre une première information d'angle de rotation, dépendant de la première position de rotation déterminée, vers un dispositif de réception du côté du véhicule ;
comportant au moins un capteur de vitesse de rotation (31), du côté du véhicule, qui est conçu pour déterminer respectivement des deuxièmes positions de rotation des roues de véhicule (11, 22) qui lui sont associées, et pour mettre à disposition, en fonction de cela, des deuxièmes informations d'angle de rotation ;
comportant un dispositif d'analyse (24) qui compare les premières informations d'angle de rotation avec les au moins deux deuxièmes informations d'angle de rotation et qui, en fonction de cette comparaison, détermine la position de montage (VL, VR, HL, HR) de la roue de véhicule (11, 22) associée au système électronique de roue (12, 21),
**caractérisé en ce que** des durées de décélération, des décélérations ou des temps d'attente intégrés volontairement par la création, du côté du système électronique de roue, du télégramme pour le signal d'émission (X1), l'émission du signal d'émission (X1), la réception et l'analyse, du côté du véhicule, du signal d'émission (X1), la transmission des premières informations d'angle de rotation résultant du signal d'émission (X1) reçu, sont inclus dans la détermination et la transmission des deuxièmes informations d'angle de rotation et dans la comparaison entre les premières et les deuxièmes informations d'angle de rotation lors de l'analyse et de la comparaison.

13. Dispositif selon la revendication 12, **caractérisé en ce que** le capteur de vitesse de rotation (31) est façonné sous la forme d'un capteur de vitesse de rotation du dispositif de correction électronique de trajectoire ou d'un capteur de vitesse de rotation du dispositif d'anti-blocage de roue.

14. Véhicule (10), en particulier véhicule de tourisme, comportant plusieurs roues de véhicule (11, 22) et comportant un dispositif d'information des pneus, qui est équipé d'un dispositif (20) selon l'une quelconque des revendications 12 ou 13.
